# EUROPÄISCHE PATENTANMELDUNG

(11) **EP 3 369 510 A1**
(43) Veröffentlichungstag der Anmeldung: **05.09.2018**
(21) Anmeldenummer: 18159496.1
(22) Anmeldetag: 01.03.2018
(51) Int. Cl.: B23D 77/00, B23Q 16/00, B23Q 3/18, B23B 51/10, B23B 49/00, B23B 49/02

(54) **SENKWERKZEUG, WERKZEUGANORDNUNG UND VERFAHREN**

(30) Priorität: 01.03.2017 DE 102017104199
(71) Anmelder: Gühring Kg, 72458 Albstadt (DE)
(72) Erfinder: VON PUTTKAMER, Ingo, 72458 Albstadt (DE)
(74) Vertreter: Spachmann, Holger

(57) **Zusammenfassung**

Die Erfindung betrifft ein Senkwerkzeug (110), insbesondere Kegelsenkwerkzeug oder Plansenkwerkzeug, umfassend einen Werkzeugschaft (128) und einen Werkzeug-kopf (130), welcher mehrere Entgratungs- oder Senkschneiden (154) und einen Einführzapfen (166) aufweist. Es wird vorgeschlagen, dass der Einführzapfen (166) zumindest eine an einer radialen Außenseite angeordnete Reibschneide (168) aufweist, die sich über weniger als 33% der Gesamtlänge des Einführzapfens (166) erstreckt, wobei die Reibschneide (168) in eine Rohbohrung (184) mit einem Durchmesser geringer als ein Soll-Durchmesser einer Bohrung (182) schneidend einführbar ist, wobei die Reibschneide (168) ebenso als Bohrschneide wirkt und am Einführzapfen (166) in einem Radius der im wesentlichen dem Radius eines Soll-Durchmessers der Bohrung (182) entspricht, angeordnet ist, und der Einführzapfen (166) den Soll-Durchmesser der Bohrung (182) aufweist und in der Bohrung (182) spielfrei führbar ist.

Des Weiteren betrifft die Erfindung eine Werkzeuganordnung mit einem Senkwerkzeug und ein Verfahren zum Herstellen einer eingesenkten und/oder entgrateten Bohrung.

## Beschreibung

Die vorliegende Erfindung betrifft ein Senkwerkzeug, insbesondere Kegelsenkwerkzeug oder Plansenkwerkzeug, umfassend einen Werkzeugschaft und einen Werkzeugkopf, welcher mehrere Entgratungs- oder Senkschneiden und einen Einführzapfen aufweist.

Des Weiteren betrifft die Erfindung eine Werkzeuganordnung mit einem derartigen Senkwerkzeug.

Des Weiteren betrifft die Erfindung ein Verfahren zum Herstellen einer oberflächenseitig eingesenkten und/oder entgrateten, einen Solldurchmesser aufweisenden Bohrung in einem Werkstück unter Verwendung eines derartigen rotierenden Senkwerkzeugs oder einer derartigen Werkzeuganordnung.

### STAND DER TECHNIK

Gattungsgemäße Senkwerkzeuge werden zum oberflächenseitigen Einsenken oder Entgraten einer in einem Werkstück vorgesehen Bohrung verwendet und können mit dem Werkzeugschaft in ein Spannfutter einer Maschine oder eines handgehaltenen Werkzeugs aufgenommen werden. Der Einführzapfen soll eine Zentrierung und Führung des Senkwerkzeugs in einer nachzubearbeitenden Bohrung gewährleisten. Derartige Senkwerkzeuge können zusätzlich einen Anschlag umfassen, welcher ein Lager aufweist, mit dem sich eine Anschlaghülse frei um das Senkwerkzeug drehen kann, so dass bei Erreichen einer vorgegebenen Eindringtiefe in ein Bauteil die Anschlaghülse auf der Oberfläche des Bauteils aufsetzen kann, und sich das Senkwerkzeug frei drehen kann. Derartige Senkwerkzeuge mit Anschlag werden insbesondere für Senk- oder Fräsarbeiten im Fahrzeug- und Flugzeugbau eingesetzt.

Beispielsweise geht aus der DE 101 54 434 B4 eine Anschlagvorrichtung mit Werkzeugschaft hervor, die eine frei drehbare Anschlaghülse umfasst, die um einen Werkzeugschaft der Anschlagvorrichtung mittels eines einzigen Drehlagers verdrehbar ist. Ein Bohr- oder Fräswerkzeug kann in den Werkzeugschaft der Anschlagvorrichtung eingesetzt und drehfest arretiert werden. Ähnliche Anschlagvorrichtungen sind in DE 10 2013 013 499 B3 und DE 10 2014 115 768 B3 beschrieben.

Die DE 10 2012 209 312 A1 zeigt einen modularen Werkzeughalter sowie ein Schaftwerkzeug, das durch einen Werkzeughalter sowie einem darin gehaltenen Schneidkopf und ein Schneidwerkzeug gebildet wird. Das Schneidwerkzeug kann als Mehrschneidenreibahle mit sechs um die Drehachse herum angeordneten Schneidkanten ausgebildet sein. Der Schneidkopf umfasst außenumfangsseitig eine Vielzahl von Wende- oder Wechselschneidplatten. Ein derartiges Schaftwerkzeug kann ein Feinbearbeitungswerkzeug darstellen, das als Stufenwerkzeug zur Komplettbearbeitung von Bauteilen wie beispielsweise Zylinderköpfen ausgebildet ist.

Mit Hilfe derartiger Anschläge kann eine Bohrung oder Senkung mit einer gewünschten Tiefe erzielt werden. Dabei kann trotz des Einführzapfens die gewünschte Ausrichtung des Bearbeitungsschrittes bezüglich der Bauteiloberfläche nur bedingt sichergestellt werden.

Es ergibt sich das Problem, dass die Senkung oder Bohrung lediglich in einem bestimmten Umfangsbereich die gewünschte Tiefe aufweist und während der Spanbearbeitung nicht in einem gewünschten Winkel, in der Regel rechtwinklig zur Werkzeugoberfläche vorgenommen werden kann. In anderen Teilbereichen kann die Bohrung oder Senkung weniger tief oder tiefer ausgebildet sein, da das Bearbeitungswerkzeug durch den Einführzapfen nicht exakt zur Oberfläche des Werkstücks ausgerichtet werden kann.

WO 2002/055244 A1 zeigt ein Bohr-Fas-Werkzeug, bei dem an einem Bohrer ein axial verschiebbarer Halter mit Senkerschneiden mittels eines Klemmschuhs befestigt ist.

Aus DE 14 77 760 A ist ein Senkwerkzeug mit einem in einer axialen-Bohrung des Werkzeugkörpers gegen die Kraft einer Feder verschiebbar angeordneten, mit einem kegeligen Ansatz am Schneidkopf herausragenden Zentrierstift bekannt, wobei der Zentrierstift an seinem Umfang mindestens eine zumindest angenähert axial wenigstens teilweise durch den Bereich des kegeligen Ansatzes verlaufende sektorartige Ausnehmung aufweist, in der eine am Schneidkopf angeordnete Schneidlippe gleitend geführt ist.

Aus dem Stand der Technik sind weiterhin Ausrichtungsvorrichtungen bzw. Justiervorrichtungen bekannt, die als Bohrvorlage oder Bohrhilfe verwendet und direkt an einem Werkzeugschaft angebracht werden können, um eine gewünschte Ausrichtung eines Drehwerkzeugs einzustellen.

So zeigt die DE 10 2013 100 130 A1 eine Vorrichtung mit einem Dreifuß mit Auflagekontrolle zur Bearbeitung durch ein Werkzeug. Die Auflagekontrolle erfolgt durch einen oder mehrere Messwertaufnehmer, der bzw. die die Messwerte der Auflage oder Nicht-Auflage von Füßen des Dreifußes wiedergibt. Als Anzeige für ein Messergebnis des Messwertaufnehmers dient ein akustisches oder visuelles Signal.

Insbesondere im Fahrzeug-, Schiffs- und Flugzeugbau sind eine exakte Ausrichtung von Drehbearbeitungsvorgängen und eine definierte Eindringtiefe des Senkwerkzeugs aufgrund einer makellosen und stromlinienförmigen Gestaltung einer Werkstückoberfläche, bei der in Befestigungsbohrungen aufgenommene Nieten oder Schrauben möglichst flächenbündig mit der Werkstückoberfläche abschließen sollen, von hoher Bedeutung.

Somit ist es Aufgabe der Erfindung, ein Senkwerkzeug vorzuschlagen, welches eine verbesserte Ausrichtbarkeit aufweist.

Die vorgenannte Aufgabe wird durch ein Senkwerkzeug nach dem unabhängigen Anspruch gelöst. Vorteilhafte Ausbildungen sind Gegenstand der Unteransprüche.

### OFFENBARUNG DER ERFINDUNG

Gegenstand der Erfindung ist ein Senkwerkzeug umfassend einen Werkzeugschaft und einen Werkzeugkopf, welcher mehrere Entgratungs- oder Senkschneiden und einen Einführzapfen aufweist.

Es wird vorgeschlagen, dass der Einführzapfen zumindest eine an einer radialen Außenseite angeordnete Reibschneide aufweist, die sich über weniger als 33 % der Gesamtlänge des Einführzapfens erstreckt, wobei die Reibschneide in eine Rohbohrung mit einem Durchmesser geringer als ein Soll-Durchmesser einer Bohrung schneidend einführbar ist, wobei die Reibschneide ebenso als Bohrschneide wirkt und am Einführzapfen in einem Radius, der im wesentlichen dem Radius eines Soll-Durchmesser der Bohrung entspricht, angeordnet ist, und der Einführzapfen den Soll-Durchmesser der Bohrung aufweist und in der Bohrung spielfrei führbar ist. Die Reibschneide kann einen Schälschnitt an der Wandung einer zu bearbeitenden Bohrung bewirken, wobei anfallende Späne in Einführrichtung des Senkwerkzeugs abgeführt werden können. Dabei wirkt die Reibschneide ebenso als Bohrschneide und ist nicht lediglich zur reibenden Nachbearbeitung einer bereits erstellten Bohrung ausgebildet, die bereits mit einem Soll-Durchmesser existiert. Durch die Reibschneide wird die zu bearbeitende Bohrung exakt auf einen Durchmesser des Einführzapfens aufgeweitet. Der Einführzapfen schneidet sich den erforderlichen Durchmesser der zu senkenden Bohrung gewissermaßen selbst. Eine zu bearbeitende Rohbohrungen weißt folglich einen geringeren Durchmesser als eine Bohrung auf, die bereits mit dem erfindungsgemäßen Senkwerkzeug bearbeitet wurde. Dabei kann die Rohbohrung beispielsweise mindestens 80 %, bevorzugt mindestens 90 %, des maximalen Durchmessers des Einführzapfens betragen. Ebenso kann der Durchmesser der Rohbohrung höchstens 99 %, bevorzugt höchstens 97,5 %, besonders bevorzugt höchstens 95 %, des maximalen Durchmessers des Einführzapfens betragen. Die Reibschneide ist dabei bevorzugt derart angeordnet, dass eine Bohrung mit einem Durchmesser entsteht, welcher dem Durchmesser des Einführzapfens entspricht. Hierdurch wird das Spiel zwischen dem Einführzapfen und dem Werkstück minimiert, was zu einer wesentlich präziseren, exakt rotationssymmetrischen Ausbildung der Einsenkung oder der Fase führt, da der Einführzapfen als Führung des Senkwerkzeugs fundiert. Winkelabweichungen zwischen der Symmetrieachse der Einsenkung oder Fase und der Symmetrieachse der Bohrung können vermieden werden.

Der Einführzapfen weist bevorzugt über die komplett Länge hinter der Reibschneide, d. h. im komplette Bereich, der bezüglich der Reibschneide in Richtung Einspannabschnitt bzw. Werkzeugschaft angeordnet ist, einen Durchmesser auf, der dem Soll-Durchmesser der Bohrung entspricht. Insbesondere weist der Einführzapfen in dem Bereich den Soll-Durchmesser auf, der direkt an die Senkschneiden angrenzt. Somit kann sichergestellt werden, dass das Senkwerkzeug zentriert in der Bohrung geführt werden kann.

Der Einführzapfen weist bevorzugt eine Länge auf, die länger ist als die Tiefe einer zu bearbeitenden Bohrung bzw. Durchgangsbohrung. Dadurch kann sichergestellt werden, dass die komplette Bohrung mit einem konstanten Durchmesser ausgebildet ist, da die Reibschneide am Einführzapfen die Bohrung über die komplette Länge auf den Soll-Durchmesser aufweitet. Es ist ebenso denkbar eine Bohrung bzw. Sacklochbohrung auszubilden, die über die Länge zwei unterschiedliche Durchmesser aufweist. Dies kann beispielsweise durch ein Senkwerkzeug mit einem Einführzapfen ausgebildet werden, bei welchem der Einführzapfen eine geringere Länge als die Tiefe der zu senkenden Bohrung aufweist.

Die Reibschneide erstreckt sich über weniger als 33 % der Gesamtlänge des Einführzapfens. Die Reibschneide kann beispielsweise eine Länge zwischen 5 % und 33 % der Gesamtlänge des Einführzapfens, insbesondere zwischen 10 % und 30 %, bevorzugt ca. 25 % der Gesamtlänge des Einführzapfens aufweisen.

Es ist vorteilhaft, wenn die Reibschneide im vorderen Bereich des Einführzapfens, d. h. am Einführzapfen in Richtung der Werkzeugspitze, angeordnet ist. An der Stirnseite des Einführzapfen es ist bevorzugt keine Reibschneide angeordnet. Die Schneidkante der Reibschneide ist bevorzugt an der Umfangsseite des Einführzapfens angeordnet, wobei eine Spanabfuhrt in Richtung vorderen Endes des Einführzapfens, d. h. in Richtung der Werkzeugspitze, erfolgt. Durch diese Art der Spanabfuhrt kann weiterhin sichergestellt werden, dass die Rotationsachse des Senkwerkzeugs sowie die Rotationsachse der Bohrung aufeinanderliegen, da keine störenden Späne in der Bohrung zurückbleiben. Die Bohrung ist folglich bevorzugt als Durchgangsbohrung ausgebildet.

Das Senkwerkzeug kann lediglich eine derartige Reibschneide aufweisen. Ebenso kann eine Mehrzahl von Reibschneiden gleichverteilt um den Umfang des Einführzapfens ausgebildet sein, beispielsweise zwei bis acht Reibschneiden.

In einer bevorzugten Ausführungsform kann die Reibschneide in einem Frontbereich des Einführzapfen angeordnet sein und / oder am Einführzapfen weitere Entgratschneiden in einer versetzten Position in Richtung Werkzeugschaft angeordnet sein, die eine Feinbearbeitung einer zu bearbeitenden Bohrung bewirken. Die Reibschneide ist bevorzugt an der Stelle angeordnet, die beim Einführen des Einführzapfens in eine Rohbohrung als erstes mit dem Umfang der Rohbohrung in Kontakt tritt. Folglich ist die Reibschneide beispielsweise an der Umfangseite des Einführzapfens angeordnet, die am nächsten an der Werkzeugspitze liegt. Sind am Einführzapfen weitere Entgratschneiden angeordnet, so sind diese bezüglich der Reibschneide versetzt in Richtung Einspannabschnitt des Werkzeugs angeordnet. Bevorzugt entspricht die Anzahl der Entgratschneiden der Anzahl der Reibschneiden. Existieren mehrere Reibschneiden sowie mehrere Entgratschneiden können jeweils eine Reibschneide sowie eine Entgratschneide auf einer Linie parallel zu Symmetrieachse des Senkwerkzeugs am Werkzeugkopf angeordnet sein. Besitzt das Senkwerkzeug zumindest eine Reibschneide sowie zumindest eine Entgratschneide, dient die Reibschneide der Aufweitung der Rohbohrung auf einen Soll-Durchmesser der gewünschten Bohrung und die Entgratschneide übernimmt das Entgraten der Innenoberfläche der Bohrung, welche bereits den Soll-Durchmesser aufweist. Dabei werden bevorzugt alle erzeugten Späne in Richtung Werkzeugspitze abgeleitet.

In einer bevorzugten Ausführungsform kann sich der Einführzapfen in Richtung seiner Stirnseite hin verjüngen. Hierdurch wird das Einführen in die zu bearbeitende Bohrung erleichtert. Die Reibschneide ist bevorzugt in dem Übergangsbereich zwischen dem verjüngten und nicht verjüngten Einführzapfen angeordnet, sodass die Bohrung auf den Soll-Durchmesser durch die Reibschneide aufgeweitet werden kann. Zumindest ist die Reibschneide im Bereich des nicht verjüngten Einführzapfens zu angeordnet. Die Stirnseite des Einführzapfens kann weiterhin flach ausgebildet sein, wobei dort keine Reibschneide bzw. kein Bereich einer Reibschneide angeordnet ist.

In einer bevorzugten Ausführungsform kann der Einführzapfen sich in einem ersten Teilbereich, insbesondere in dem Teilbereich, über den sich die Reibschneide erstreckt, in Richtung seiner Stirnseite hin verjüngen und in einem zweiten, zwischen dem ersten Teilbereich und dem Werkzeugkopf vorgesehenen Teilbereich zylindrisch sein. Beim Einführen des Senkwerkzeugs in die zu bearbeitende Bohrung gelangt zunächst der erste Teilbereich mit der Reibschneide in die Bohrung. Mit zunehmender Einführtiefe gelangt die Reibschneide mit der Wandung in Kontakt und trägt dort Material ab, bis die Bohrung ihren Solldurchmesser erreicht hat, der durch den radial äußersten Teilabschnitt der Reibschneide bestimmt ist. Mit weiter zunehmender Einführtiefe gelangt dann zunächst der zylindrische Teilbereich des Einführzapfens in die Bohrung hinein und übernimmt dort die Führung des Senkwerkzeugs, bis schließlich der Werkzeugkopf mit seinen Entgratungs- oder Senkschneiden in Kontakt mit dem Werkstück gelangt. Die Schneidkanten der Reibschneide stehen bevorzugt nicht bzw. nicht wesentlich über den Durchmesser des zylindrischen Teilabschnitts über. In einer bevorzugten Ausführungsform kann der Halbmesser des Einführzapfens im zweiten, zylindrischen Teilbereich gleich dem Halbmesser des Einführzapfens in einem durch einen radial äußersten Teilabschnitt der Reibschneide bestimmten Punkt sein. Dadurch wird das Spiel zylindrischen Teilbereichs des Einführzapfens in der aufgeweiteten Bohrung noch weiter minimiert. Dabei entspricht der Durchmesser des zylindrischen Teilabschnitts des Einführzapfens dem Soll-Durchmesser der zu bearbeitenden Bohrung, sodass der zylindrische Teilabschnitt des Einführzapfens nahezu spiellos in die Bohrung eingeführt werden kann. Die Schneidkanten der Reibschneide stehen folglich nicht bzw. nicht wesentlich über den Durchmesser des zylindrischen Teilabschnitts über.

In einer bevorzugten Ausführungsform kann sich der Einführzapfen in einem Längsschnitt durch das Senkwerkzeug betrachtet entlang einer Krümmungslinie verjüngen, deren Krümmung mit abnehmender Distanz zu der Stirnseite des Einführzapfens zunimmt. Der Einführzapfen, insbesondere der die Reibschneide aufweisende erste Teilbereich weist also die Form eines (ggf. stirnseitig abgeschnittenen) Paraboloids auf. Dabei kann die Reibschneide zumindest teilweise in diesem ersten Teilbereich angeordnet sein sowie ebenso in einem zylindrischen Abschnitt des Einführzapfens verlaufen.

In einer bevorzugten Ausführungsform kann die Reibschneide von der Stirnseite des Einführzapfens in axialer Richtung beabstandet sein, wobei insbesondere die Stirnseite des Einführzapfens flach ist. Es existiert also ein reibschneidenfreier Teilabschnitt an der Spitze des Einführzapfens, welcher das Einführen des Senkwerkzeugs in die Bohrung erleichtert, eine erste Grobzentrierung bewirkt und insbesondere die Gefahr eines Verhakens oder Verkantens der Reibschneide beim Eintauchen in die Bohrung reduziert. Der erste Teilabschnitt, der reibschneidenfrei ausgebildet ist, kann dabei den Durchmesser der unbearbeiteten Rohbohrung aufweisen. Dieser erste Teilabschnitt kann folglich einen geringeren Durchmesser als der Durchmesser des Einführzapfens besitzen.

Gegenstand der Erfindung ist weiterhin eine Werkzeuganordnung mit einem erfindungsgemäßen Senkwerkzeug, insbesondere nach einer der vorgenannten Ausführungsformen, und einem an dem Werkzeugschaft des Senkwerkzeugs befestigtem Anschlag, wobei der Anschlag eine mit einem Gleit- oder Wälzlager um das Werkzeug frei drehbar gekoppelte Anschlaghülse aufweist.

In einer bevorzugten Ausführungsform kann eine erste Lagerbuchse des Lagers die Anschlaghülse tragen und eine zweite Lagerbuchse des Lagers drehfest auf einer Schafthülse sitzen, wobei die Schafthülse auf einem gewindefreien Abschnitt des Werkzeugschafts des Werkzeugs befestigt sein kann. Die Schafthülse koppelt die Anschlaghülse über ein Drehlager mit dem Werkzeugschaft des Senkwerkzeugs. Der Werkzeugschaft ist dabei gewindefrei ausgeführt, d.h. er ist in der Regel glatt und ohne Gewindeabschnitt ausgeführt. Hierdurch ergibt sich keine radiale Verdickung des Werkzeugschafts gegenüber dem Schaftnenndurchmesser. Die Schafthülse kann drehfest an einer axialen Position des Werkzeugschafts befestigt werden. Die Position der Schafthülse am Werkzeugschaft und die Position der Anschlaghülse an der Lagerbuche definieren die Eintauchtiefe des Werkzeugs, bis zu der die Anschlaghülse auf einer Oberfläche eines zu bearbeitenden Werkstücks aufsetzt. Wird eine hierdurch festgelegte Eintauchtiefe erreicht, sitzt ein stirnseitiger Anschlagring der Anschlaghülse auf der Werkzeugoberfläche auf, während sich das Werkzeug im Inneren frei mit der Schafthülse dreht, und die Anschlaghülse aufgrund der Gleit- oder Wälzlagerkopplung mit dem Verstellring auf der Bauteiloberfläche ruhen kann.

Der Schaft des Werkzeugs kann unmittelbar in ein Spannfutter einer Drehmaschine oder einer Bohrmaschine eingespannt werden, so dass ein optimaler Rundlauf gewährleistet ist. Der Ansetzwinkel des Werkzeugs kann optimal gewählt werden, wobei die Anschlaghülse keine mittelbare Verbindung zwischen Werkzeugkopf und antreibendem Bohrwerkzeug bildet, sondern lediglich auf dem Bohrschaft des Werkzeugs aufsetzt. Der Tiefenanschlag wird durch die Position der Schafthülse auf dem Bohrschaft sowie die relative axiale Position der frei drehbaren Anschlaghülse zur Schafthülse definiert.

In einer bevorzugten Ausführungsform kann der Anschlag auf dem Werkzeugschaft des Senkwerkzeugs aufgeklemmt, aufgeschraubt oder aufgeklebt werden.

In einer bevorzugten Ausführungsform kann an dem Anschlag eine Werkzeug-Ausrichtungsvorrichtung zum Ausrichten einer einzubringenden Senkung oder zum Ausrichten eines Nachbearbeitungsschrittes gegenüber einer Normalen der Oberfläche eines zu bearbeitenden Werkstücks angeordnet sein, wobei die Werkzeug-Ausrichtungsvorrichtung einen Grundkörper, und ein Durchgangsloch und mindestens eine Signaleinrichtung umfassen kann, die bei mechanischem Kontakt der Werkzeug-Ausrichtungsvorrichtung mit der Oberfläche des Werkstücks aktiviert wird und mindestens ein Ausrichtsignal beim Ausrichten in einer Ausrichtungsrichtung ausgibt, und wobei in dem Grundkörper der Anschlag aufgenommen ist.

Mit anderen Worten wird eine Ausrichtungsvorrichtung bzw. Justiervorrichtung als Senkhilfe vorgeschlagen, die durch mechanischen Kontakt mit der Oberfläche eines Werkstücks eine Signaleinrichtung aktiviert, wodurch angegeben wird, dass sich das Werkzeug in der gewünschten Bearbeitungsposition d.h. Ausrichtvorrichtung befindet. Die Ausrichtvorrichtung kann regelmäßig ein 90° Winkel zur Werkstückoberfläche sein, kann allerdings auch ein frei wählbarer Neigungswinkel und Neigungsrichtung gegenüber der Werkstückoberfläche sein. Die Werkzeug-Ausrichtungsvorrichtung wird dafür an ein Werkzeug mit einem Anschlag angebracht. Dafür wird der Anschlag des Werkzeugs in dem Grundkörper der Werkzeug-Ausrichtungsvorrichtung aufgenommen und gelagert und so das Werkzeug samt Anschlag in der Werkzeug-Ausrichtungsvorrichtung gehalten. Somit kann das Senkwerkzeug ausgerichtet werden. Hierdurch ist es möglich, zum einen eine präzise Eindringtiefe durch den Anschlag zu gewährleisten, was gerade bei Senkungen wichtig ist, zum anderen einen definierten Bearbeitungswinkel einzuhalten.

Die Werkzeug-Ausrichtungsvorrichtung kann vorteilhaft als Dreibein ausgebildet sein, in das der Anschlag aufnehmbar ist.

Mit einer derartigen Ausrichtungsvorrichtung ist die vorbestimmbare Einstellung einer Arbeitsposition vorzugsweise in einer orthogonalen Richtung zu einer Tangente auf einer Oberfläche eines Werkstücks, d.h. in Richtung einer Normalen zur Werkstückoberfläche möglich. Dies erlaubt weiterhin die definierte Ausrichtung des Senkwerkzeugs auf ebenen und gekrümmten Oberflächen. Der Grundkörper der Werkzeug-Ausrichtungsvorrichtung ist bevorzugt in Bezug auf die Rotationsachse mit einer größeren Längsabmessung ausgebildet als der Anschlag. Die Werkzeug-Ausrichtungsvorrichtung kann dabei mindestens die zweifache Länge des Anschlags, bevorzugt mindestens die dreifache Länge des Anschlags in Bezug auf die Rotationsachse aufweisen. Im Umfang kann der Anschlag komplett von dem Grundkörper umschlossen sein. Der Grundkörper hat zumindest über einen Teil der Länge bevorzugt eine teilkreisförmige oder kreisförmige Form. Eine teilkreisförmige Form hat den Vorteil, dass die komplette Werkzeug-Ausrichtungsvorrichtung zumindest mit einer Seite nahe an eine Wand, die parallel zur Rotationsachse des Werkzeugs verläuft, herangeführt werden kann. So kann eine Bohrung oder Senkung nahe einer derartigen senkrechten Wand in ein Werkstück eingebracht werden, oder an der Wand angesetzt werden, um eine definierte Ausrichtungsrichtung festzulegen.

Durch die Kombination des erfindungsgemäßen Senkwerkzeugs mit der vorgenannten Werkzeug-Ausrichtungsvorrichtung zu einer Werkzeuganordnung können Einsenkungen und / oder Fasen mit besonders hoher Präzision hergestellt werden.

In einer bevorzugten Ausführungsform kann der Grundkörper eine Führungseinrichtung umfassen, die eine Verbindung zwischen einer Anschlaghülse des Anschlags und der Werkzeug-Ausrichtungsvorrichtung herstellt, sodass der Anschlag in die Ausrichtungsrichtung ausrichtbar ist. Die Führungseinrichtung dient dazu, eine Relativbewegung zwischen einem eingebauten Anschlag und der Werkzeug-Ausrichtungsvorrichtung zu erlauben oder zu unterbinden. Bevorzugt wird durch die Führungseinrichtung eine rotatorische Relativbewegung zwischen dem Anschlag und der Werkzeug-Ausrichtungsvorrichtung unterbunden und eine axiale Längsverschiebung erlaubt. Die Führungseinrichtung ist bevorzugt entlang eines begrenzten Umfangsbereichs an der Innenoberfläche des Grundkörpers der Werkzeug-Ausrichtungsvorrichtung angebracht. Dabei kann die Führungseinrichtung auch teilweise im Grundkörper integriert sein. Die Führung erfolgt bevorzugt mechanisch. Es ist weiterhin denkbar, dass ein Anschlag auch Teil der Werkzeug-Ausrichtungsvorrichtung ist und / oder an die Geometrie der Werkzeug-Ausrichtungsvorrichtung angepasst ist. Für einen Einsatz kann somit ein Spanwerkzeug in den Anschlag, der Teil der Ausrichtvorrichtung ist, eingeführt und befestigt werden.

In einer bevorzugten Ausführungsform kann der Anschlag drehfest mit der Werkzeug-Ausrichtungsvorrichtung verbindbar sein. Eine drehfeste Verbindung kann über die Führungseinrichtung erfolgen, wobei bei Betrieb eines eingebauten Werkzeugs mit Anschlag der Anschlag sowie die Werkzeug-Ausrichtungsvorrichtung keine Rotation erfährt, d.h. drehfest ist. Dabei kann eine unversehrte Oberfläche auf der Werkstückoberfläche im Bereich der Bohrung und / oder Senkung beibehalten und erreicht werden, da sich keine tangentiale Relativbewegung zwischen Anschlag und Werkstückoberfläche ergeben kann.

In einer bevorzugten Ausführungsform kann der Anschlag längsverschieblich in der Werkzeug-Ausrichtungsvorrichtung geführt sein, insbesondere durch die Führungseinrichtung geführt sein, wobei der Anschlag in dem Grundkörper längsaxial in Richtung Werkstück verschoben werden kann. Vorzugsweise besitzt der Anschlag bezüglich der Längsachse der Werkzeug-Ausrichtungsvorrichtung eine geringere Länge als der Grundkörper der Werkzeug-Ausrichtungsvorrichtung. Alternativ kann ein Anschlag auch über einer oberen Stirnfläche der Ausrichtvorrichtung herausgezogen werden, so dass eine geringe Bauhöhe der Ausrichtvorrichtung erreicht werden kann. Somit kann der eingebaute Anschlag innerhalb des Grundkörpers in axialer Längsrichtung verschoben werden. Der Anschlag kann zumindest soweit in Längsrichtung verschoben werden, dass die Unterkante des Anschlags und die Unterkante der Werkzeug-Ausrichtungsvorrichtung auf gleicher Höhe liegen. In einer abgesenkten Position des Anschlags stehen dieser und die Unterkante der Werkzeug-Ausrichtungsvorrichtung mit der Oberfläche des Werkstücks in Kontakt. Über den Anschlag kann die Tiefe der einzubringenden Bohrung und / oder Senkung bestimmt werden, während die Werkzeug-Ausrichtungsvorrichtung die Ausrichtung der Bohrung und / oder Senkung bestimmt und in einer gewünschten Position hält.

In einer bevorzugten Ausführungsform kann die Führungseinrichtung einen Pin, einen Steg und / oder eine Nut umfassen, wobei bevorzugt der Steg und / oder die Nut in Längsrichtung, bevorzugt parallel zur Längsachse, der Werkzeug-Ausrichtungsvorrichtung verlaufen und entsprechend in einer Nut, oder einem Pin oder Steg der Anschlaghülse längsaxial führbar sind, sodass eine drehfeste Verbindung zwischen der Werkzeug-Ausrichtungsvorrichtung und dem Anschlag und eine axiale Verschieblichkeit des Anschlags in der Werkzeug-Ausrichtungsvorrichtung bereitgestellt wird. Dabei wird der Pin oder der Steg in der Nut derart geführt, dass der Anschlag drehfest mit der Werkzeug-Ausrichtungsvorrichtung verbunden werden kann. Die Nut kann entlang einer Innenfläche des Grundkörpers der Werkzeug-Ausrichtungsvorrichtung oder in der Außenfläche des Anschlags angeordnet sein. Dementsprechend kann der Pin bzw. der Steg ebenso an dem Anschlag oder an dem Grundkörper angebracht sein, sodass für eine Führungseinrichtung jeweils mindestens ein Pin bzw. Steg in mindestens eine, auf dem jeweils anderen Element angeordnete, Nut eingreifen kann. Die Breite der Nut entspricht dabei in etwa der Breite des Pins bzw. des Stegs, sodass eine drehfeste Lagerung ermöglicht wird. In einer bevorzugten Ausführungsform kann die Führungseinrichtung mindestens zwei, bevorzugt drei derartige Steg-Nut bzw. Pin-Nut Verbindungen in Umfangsrichtung der Werkzeug-Ausrichtungsvorrichtung umfassen.

In einer bevorzugten Ausführungsform kann der Steg oder die Nut über die komplette axiale Länge der Werkzeug-Ausrichtungsvorrichtung oder des Anschlags verlaufen, sodass der Anschlag derart verschoben werden kann, dass eine Unterseite des Anschlags in mechanischen Kontakt mit der Oberfläche des Werkstücks treten kann. Bevorzugt ist die Werkzeug-Ausrichtungsvorrichtung in Bezug auf die Längsachse länger als der Anschlag ausgebildet, sodass der Steg oder die Nut bevorzugt über die komplette Länge der Werkzeug-Ausrichtungsvorrichtung verlaufen kann. Somit wird sichergestellt, dass der Anschlag bis zur Unterkante der Werkzeug-Ausrichtungsvorrichtung oder auch darüber hinaus verschoben werden kann und mit einem Werkstück in Kontakt treten kann, um die Senkungs- bzw. Bohrtiefe zu bestimmen. Die Nut bzw. der Steg können linear parallel zur Längsachse der Werkzeug-Ausrichtungsvorrichtung verlaufen oder auch gekrümmt bzw. abgewinkelt. Dabei kann die Nut bzw. der Steg auch eine Spiralform entlang der Innenoberfläche des Grundkörpers der Werkzeug-Ausrichtungsvorrichtung ausbilden um eine rotatorische Zwangsbewegung beim Absenken auszuführen, beispielsweise um von der Werkstückfläche abstehende Teile aufzunehmen oder zu umgehen.

In einer bevorzugten Ausführungsform kann die Werkzeug-Ausrichtungsvorrichtung mindestens zwei, bevorzugt mindestens drei mechanische oder elektrische Tastelemente zur Auflage auf der Oberfläche des Werkstücks umfassen, wobei bevorzugt die Tastelemente umfangsmäßig gleichverteilt an der werkstückseitigen Stirnfläche des Grundkörpers angeordnet sind. Bei einer Ausführung mit drei Tastelementen kann die Werkzeug-Ausrichtungsvorrichtung als eine Art Dreibein ausgebildet sein. Durch die Ausbildung separater Tastelemente anstatt einer großflächigen Auflagefläche kann der Bereich um die zu bearbeitende Stelle an der Oberfläche eines Werkstücks frei bleiben, wodurch Späne oder Kühlmittel besser abgeführt werden können. Weiterhin kann eine Übermittlung der Daten an einen Computer bereitgestellt werden, die der Qualitätskontrolle dient. Durch die Aktivierung der Signaleinrichtung über mechanischen Kontakt der Tastelemente mit einer Oberfläche ist keine Verwendung von Messaufnehmern oder sonstigen Wegmessern erforderlich. Dadurch kann eine kostengünstige sowie einfach herstellbare Ausrichtvorrichtung bereitgestellt werden, die ohne elektrische Energie verwendbar ist. Soll die Bohrung oder Senkung lediglich in einer Richtung austariert werden, kann die Werkzeug-Ausrichtvorrichtung nur mit zwei Tastelementen ausgeführt werden. Für die Ausrichtung in zwei Raumrichtungen ist die Ausführung mit drei oder mehreren Tastelementen vorteilhaft. Die dritte Raumrichtung, d.h. die Höhe, in der das Werkzeug angesetzt wird, bestimmt sich durch die lichte Bearbeitungshöhe über der Oberfläche des Werkstücks und der Tiefe des Bearbeitungsabschnitts. Ebenso können mehr als drei Tastelemente eingesetzt werden. Durch eine Längenveränderung der Tastelemente oder Verstellung des Kontaktpunktes der Tastelemente, d.h. der relativen Schaltposition, bei dem beim Aufsetzen der Tastelemente und Einfahren der Tastelemente in den Grundkörper ein elektrischer Schalter geschlossen wird, können auch Winkelabweichungen von der Normalen und somit vorgegebene Schrägwinkel zur Bearbeitung eingestellt werden.

In einer bevorzugten Ausführungsform kann die axiale Tastposition der Tastelemente zur Einstellung der Ausrichtungsrichtung verstellbar sein. Somit ist es möglich, nicht nur Senkungen und /oder Bohrungen orthogonal zu einer Werkstückoberfläche, sondern auch in einem gewünschten Winkel ungleich 90° auszurichten. Indem mindesten ein Tastelement eine veränderte Länge in Bezug zu den übrigen Tastelementen aufweist kann die Ausrichtung unter beliebigen Winkeln bezüglich der Werkstückoberfläche erfolgen. Weiterhin kann auf einer schrägen Werkstückoberfläche eine orthogonale Ausrichtung der Bohrung und / oder Senkung bezüglich der Vertikalen erfolgen.

In einer bevorzugten Ausführungsform kann durch eine Ausrichtbewegung der Werkzeug-Ausrichtungsvorrichtung bezüglich der Normalen der Oberfläche des Werkstücks alle Tastelemente einen Stromkreis zwischen einer im Grundkörper umfassten elektrischen Stromquelle und der Signaleinrichtung durch eine von den Tastelementen aktivierten Reihenschaltung geschlossen werden, um durch den geschlossenen Stromkreis die einzelne Signaleinrichtung zu aktivieren. Durch den mechanischen Kontakt der Tastelemente mit der Oberfläche eines Werkstücks oder einer sonstigen Oberfläche wird ein Stromkreis mittels Reihenschaltung geschlossen, wodurch eine Signaleinrichtung erst bei Kontaktierung aller Tastelemente aktiviert wird und ein Ausrichtsignal abgibt. Bei der Ausführung der Ausrichtvorrichtung mit drei Tastern kann eine orthogonale Ausrichtung der Ausrichtvorrichtung und damit des Werkzeugs festgestellt werden. Es lässt sich ein elektrisch einfacher Schaltkreis ohne elektronische Zusatzelemente einsetzen.

In einer bevorzugten Ausführungsform kann ein elektrischer Schaltpunkt zumindest eines elektrischen Tastelements in Auflagerichtung hin zur Oberfläche des Werkstücks lageverstellbar, insbesondere relativ zur Oberfläche des Werkstücks mittels einer Kontaktjustierschraube verschraubbar oder verschiebbar sein, so dass die Ausrichtungsrichtung bezüglich der Normalen einer Oberfläche eines Werkstücks einstellbar ist. Hierdurch kann der Schaltpunkt, d.h. die Relativstellung von Testelement zum Grundkörper, bei der ein elektrischer Kontakt durch das jeweilige Tastelement ausgelöst wird, eingestellt werden. Hierdurch ist es sehr einfach, eine Ausrichtung zur Normalen der Werkstückoberfläche einzustellen. Ist der Schaltpunkt für jedes Tastenelement gleich eingestellt, wird eine Ausrichtung entlang der Normalen erreicht. Sind die Schaltpunkte verschieden eingestellt, ergibt sich eine jeweilige Winkel- und Richtungseinstellbare Abweichung zur Normalen, so dass auch Schrägbearbeitungen bzgl. der Werkstückoberfläche eingestellt werden können. Es ist somit nicht nötig, einen hohen Druck auf die Oberfläche des Werkstücks mit der Ausrichtvorrichtung auszuüben, um sicher zu stellen, dass die die Vorrichtung vollständig aufliegt. Durch die Kontaktjustierschraube kann der Schaltpunkt derart sensibel eingestellt werden, dass bereit bei leichtem Kontakt der Ausrichtvorrichtung mit der Oberfläche des Werkstücks die Signaleinrichtung aktiviert wird. Die Kontaktjustierschraube ist dafür bevorzugt in einer Richtung parallel zur Richtung des eingeführten Werkzeugschafts verschieblich und einstellbar.

In einer bevorzugten Ausführungsform kann zumindest ein mit zumindest einem elektrischen Tastelement mechanisch kontaktierbares Federkontaktblech über die Kontaktjustierschraube mit einem Schraubenkontaktblech elektrisch kontaktierbar sein, wobei die Kontaktjustierschraube bevorzugt von der Oberseite des Grundkörpers zugänglich und einstellbar und in Ausrichtungsrichtung im Grundkörper angeordnet ist, oder es können zumindest zwei Kontaktjustierschrauben über ein gemeinsames Federkontaktblech elektrisch verbindbar sein und zumindest zwei Kontaktjustierschrauben über ein Schraubenkontaktblech elektrisch miteinander verbunden sein. Das Federkontaktblech kann sich derart deformieren, dass im Ausgangszustand kein Kontakt zwischen Federkontaktblech und Kontaktjustierschraube vorhanden ist, während bei Auflage der Werkzeug-Ausrichtungsvorrichtung auf eine Oberfläche und bei Kontakt der Taster mit der Oberfläche die Verschiebung der Taster eine Deformation des Federkontaktblechs erzeugen können, sodass ein Kontakt zwischen Federkontaktblech und Kontaktjustierschraube herbeigeführt wird. Der relative Abstand der Kontaktjustierschraube vom Federelement bestimmt die Lage des Schaltpunktes. Durch eine axiale Verstellung der Kontaktjustierungsschraube, entweder mittels Schraub- oder axiale Schiebebewegung kann der Schaltpunkt hochgenau eingestellt und somit die Bearbeitungsrichtung eingestellt werden. Der Ausgangszustand beschreibt hier den Zustand vor dem Aufsetzen der Werkzeug-Ausrichtungsvorrichtung auf einer Oberfläche. Dadurch, dass die Kontaktjustierschraube von der Oberseite des Grundkörpers zugänglich und einstellbar ist, kann bereits bei Auflage und Anpressung der Tastelemente der Werkzeug-Ausrichtungsvorrichtung auf der Werkstückoberfläche durch Verstellen der axialen Lage der Kontaktjustierschrauben eine Einstellung der Bearbeitungsrichtung vorgenommen werden, ohne dass für eine Verstellung die Werkzeug-Ausrichtungsvorrichtung vom Werkstück abgenommen werden muss. Durch die elektrische Verbindung zwischen mindestens zwei Kontaktjustierschrauben kann eine elektrische Reihenverbindung der einzelnen Kontaktpunkte, an denen die Tastelemente einen mechanischen Kontakt herstellen, sehr einfach mit einer minimalen Bauteilzahl erreicht werden, wodurch ein geschlossener Stromkreis erzielt wird.

In einer bevorzugten Ausführungsform kann das mindestens eine Federkontaktblech parallel zu dem mindestens einen Schraubenkontaktblech im Grundkörper angeordnet sein, wobei das Schraubenkontaktblech mit dem Federkontaktblech über mindestens ein Kontaktjustierschraube durch eine, durch das Tastelement ausgelöste, Federbewegung elektrisch kontaktierbar ist. Somit können Federkontaktbleich und Schraubenkontaktbleich bezogen auf eine Werkstückoberfläche parallel und übereinander angeordnet werden, wobei die Kontaktjustierungschraube axial in Richtung der Werkstückoberfläche ausgerichtet sind, und den Schaltpunkt einstellen. Ein Stromfluß kommt über das Schraubenkontaktbleich, die Kontaktjustierschraube und beim Verbiegen des Federkontaktbleich durch das Tastelement beim Berühren des Federkontaktblechs mit der Kontaktjustierschraube zustande. Somit wird ein mechanisch einfacher und robuster Aufbau erreicht. Das Federkontaktblech und das Schraubenkontaktblech können unterschiedlich oder baugleich ausgebildet sein. Ebenso können diese aus dem gleichen Material bestehen. Es können auch mehrere Federkontaktbleche und mehrere Schraubenkontaktbleche vorhanden sein, wobei diese ebenso baugleich ausgeführt sein können. Bevorzugt wird über die Geometrie der Federkontaktbleche und Schraubenkontaktbleche der Verlauf des Stromflusses innerhalb der Werkzeug-Ausrichtungsvorrichtung bestimmt.

In einer bevorzugten Ausführungsform kann eine elektrische Stromquelle und / oder die Signaleinrichtung in elektrischem Kontakt mit mindestens einem Federkontaktblech und /oder mindestens einem Schraubenkontaktblech stehen. Die Signaleinrichtung kann weiterhin mit einem Kontakt der Stromquelle verbunden sein. Es wird ein Reihenschaltkreis vorgeschlagen, mit einer minimalen elektrischen Leitungsführung und einem robusten und einfachen Aufbau mit einer Minimalzahl elektrischer Verbindungen. Somit kann lediglich durch einen mechanischen Kontakt aller Tastelemente mit der Oberfläche des Werkstücks, wodurch über das mindestens eine Federkontaktblech und / oder mindestens eine Schraubenkontaktblech ein Stromkreis geschlossen wird, ein Ausrichtungssignal aktiviert werden.

In einer bevorzugten Ausführungsform kann das mindestens eine Schraubenkontaktblech Bohrungen aufweisen, in welche die Kontaktjustierschraube einsteckbar, einlötbar oder einschraubbar ist, wodurch eine permanentleitende Verbindung zwischen dem Schraubenkontaktblech und der Kontaktjustierschraube hergestellt wird. Dabei stellen die Bereiche, in denen durch eine Bewegung der Tastelemente ein mechanischer Kontakt zwischen dem Federkontaktblech und der jeweiligen Kontaktjustierschraube hergestellt werden kann, die einzigen Bereiche das, die eine Unterbrechung oder ein Komplettieren des Stromkreises bewirken können. Dadurch, dass die Schraubenkontaktbleche elektrisch leitend fest mit den Kontaktjustierschrauben verbunden sind, werden die beweglichen Stellen in der Werkzeug-Ausrichtungsvorrichtung minimiert und die elektrische Robustheit erhöht, wodurch die Funktionsfähigkeit optimiert wird.

In einer bevorzugten Ausführungsform kann zumindest eine Kontaktjustierschraube über eine Arretierschraube lagegesichert werden. Damit kann die Sensibilität des Kontaktpunktes mit einer hohen Genauigkeit eingestellt werden und ein unbeabsichtigtes Verstellen der Ausrichtungseinstellung verhindert werden. Werden alle Kontaktjustierschrauben, bevorzugt alle drei Kontaktjustierschrauben, mit jeweils einer Arretierschraube fixiert, kann die Lage bezüglich einer Normalen zur Oberfläche eines Werkstücks mit einer hohen Genauigkeit eingestellt werden. Die Arretierschraube kann radial an der Kontaktjustierschraube ansetzen, um eine Lageveränderung zu verhindern. Die Arretierschraube kann vom Außenumfang des Grundkörpers zugänglich sein, und vor einer Änderung der Ausrichtung durch die Kontaktjustierschraube gelöst werden. Die Einbringung von Bohrungen oder Senkungen mit einer geringen Fehlertoleranz bezüglich der Ausrichtungsrichtung kann dadurch erzielt werden.

In einer bevorzugten Ausführungsform können die mindestens zwei Tastelemente, bevorzugt mindestens drei Tastelemente die gleiche Länge L aufweisen. Hierdurch erhöht sich die Anzahl der Gleichelemente und eine Ausrichtung entlang der der Normalen einer Werkstückoberfläche wird vereinfacht. Damit kann eine optimale Ausrichtung der Bohrung oder der Senkung in einem Werkstück erzielt werden. Weiterhin kann der Grundkörper kreiszylinderförmig oder teilkreiszylinderförmig ausgebildet sein. Durch unterschiedliche Geometrien des Querschnitts des Grundkörpers kann der minimale Abstand der Tastelemente zum Rand des Grundelements festgelegt werden. Dadurch bestimmt sich auch der minimale Abstand zu einer Begrenzungswand oder einem weiteren Werkstückelement, das in einem Winkel zu der Oberfläche angeordnet ist, auf der die Werkzeug-Ausrichtungsvorrichtung mit den Tastelementen aufgesetzt werden soll. Somit wird dadurch ebenfalls der Abstand einer Bohrung, Senkung oder Ähnlichem zu einer Begrenzungswand des Werkstücks minimiert, da der Grundkörper in einem minimalen Abstand mit der Begrenzungswand in Kontakt tritt. Um möglichst nahe an einer derartigen Begrenzung eine Bohrung oder Drehbearbeitung ausgerichtet einbringen zu könnten, kann der Grundkörper an einer Seite abgeflacht oder mit einer speziellen Querschnittsgeometrie ausgestaltet sein, um formkomplementär zur Oberflächengeometrie des Werkstücks eine Ausrichtung bereitzustellen. Die Geometrie des Grundkörpers kann ebenso zur Ausrichtung der Bohrung oder Senkung dienen, wenn der Grundkörper an einer oder an mehreren Seiten mit einer Begrenzungswand oder einem weiteren Werkstückelement in Kontakt tritt. Gerade bei komplexen Werkstückgeometrien ist eine Anpassung der Grundkörpergeometrie vorteilhaft. Weiterhin kann die Signaleinrichtung auf der Oberseite des Grundkörpers angeordnet und als optischer, haptischer und / oder als akustischer Signalgeber, bevorzugt als LED-Signalgeber ausgebildet sein. Von dieser Seite ist die Signaleinrichtung optimal für eine Bedienperson während der Bedienung des Werkzeugs sichtbar. Ebenso kann die Signaleinrichtung auf einer seitlichen Position am Grundkörper angebracht sein oder über ein Verbindungskabel oder drahtlos an eine Bedienposition übertragen werden, falls die Werkzeug-Ausrichtungsvorrichtung während der Bedienung durch eine Bedienperson nicht einsehbar ist. So ist denkbar, über eine elektrische Verbindungsleitung ein akustisches oder optisches Signal an einen Bediener auch unter schwierigen akustischen oder optischen Verhältnissen weiterzuleiten.

Bevorzugt kann die Stirnseite der auf der Werkstückoberfläche aufsetzenden Tastelemente ein Kugel- oder Rollenlager aufweisen, so dass die Ausrichtungsvorrichtung auf der Werkstückoberfläche verfahrbar ist und dabei ein vordefinierbarer Bearbeitungswinkel eingehalten werden kann. Insbesondere bei Fräswerkzeugen kann vorteilhafterweise ein partielles Ausfräsen von Ausnehmungen durch eine verfahrbare Ausrichtungsvorrichtung erleichtert werden.

Gegenstand der Erfindung ist weiterhin ein Verfahren zum Herstellen einer oberflächenseitig eingesenkten und / oder entgrateten, einen Solldurchmesser aufweisenden Bohrung in einem Werkstück unter Verwendung eines rotierenden Senkwerkzeugs oder einer Werkzeuganordnung nach zumindest einer der vorgenannten Ausführungsformen, mit den Schritten: Einbringen einer Rohbohrung in das Werkstück und Einsenken und / oder Entgraten der Rohbohrung mittels des Senkwerkzeugs.

Es wird vorgeschlagen, dass der Durchmesser der Rohbohrung kleiner gewählt ist als ein maximaler, durch einen radial äußersten Teilabschnitt der Reibschneide bestimmter Durchmesser des Einführzapfens des Senkwerkzeugs, so dass die Rohbohrung mittels der an dem Einführzapfen angeordneten Reibschneide auf den Solldurchmesser aufgeweitet wird. Dabei kann durch die Reibschneide bevorzugt eine Bohrung ausgebildet werden, deren Durchmesser dem Durchmesser des Einführzapfens entspricht. Dadurch kann der Einführzapfen spielfrei in der Bohrung geführt werden, wodurch eine exakt ausgerichtete Senkung bzw. Fase an der Oberseite der Bohrung mithilfe der Senkschneiden ausgebildet werden kann.

Bevorzugt kann der Durchmesser der Rohbohrung mindestens 80%, bevorzugt mindestens 90%, des maximalen Durchmessers des Einführzapfens betragen. Bevorzugt kann der Durchmesser der Rohbohrung höchstens 99%, bevorzugt höchstens 97,5%, besonders bevorzugt höchstens 95% des maximalen Durchmessers des Einführzapfens betragen. Dadurch fungiert die Reibschneide ebenso als Bohrschneide, wodurch sich der Einführzapfen den erforderlichen Soll-Durchmesser sozusagen selbst aufweitet. Durch die bevorzugt im vorderen Bereich des Einführzapfens angeordnete Reibschneide kann ein Schälschnitt mit Spanabfuhrt in Richtung Werkzeugspitze ausgebildet werden.

In einer bevorzugten Ausführungsform des Verfahrens kann der Einführzapfen länger als eine maximale Tiefe der Rohbohrung ausgebildet sein, wobei bei Ausbildung einer Senkbearbeitung die Reibschneide über die Bohrung an einer gegenüberliegenden Seite bezüglich der Senkbearbeitung übersteht, bevorzugt die komplette Erstreckung der Reibschneide aus der Bohrung heraussteht. Dies entspricht der Nachbearbeitung eines Durchgangsloches bzw. einer Durchgangsbohrung, die über die komplette Länge nach der Bearbeitung mit dem Senkwerkzeug einen konstanten Durchmesser aufweisen soll. Dies wird dadurch erreicht, dass die Reibschneide die komplette Innenoberfläche der zu bearbeitenden Bohrung, insbesondere über die komplette Länge der Bohrung, nachbearbeitet.

Ist ebenso denkbar, dass eine Ausbildung einer Senke oder Fase erst dann beginnt, wenn die Reibschneide den kompletten Durchmesser über die komplette Länge der Bohrung nachbearbeitet hat. D. h. eine Senke oder Fase wird erst dann erstellt, wenn die Reibschneide an der gegenüberliegenden Seite aus der Bohrung heraussteht bzw. übersteht und demnach nicht mehr in Kontakt mit der Innenoberfläche der Bohrung steht.

In einer bevorzugten Ausführungsform des Verfahrens kann der Einführzapfen eine Länge aufweist, mit welcher dieser mit der Innenoberfläche der Bohrung vollflächig in Kontakt steht. Bevorzugt steht der komplette Einführzapfen mit der Umfangseite mit der Innenoberfläche der Bohrung während der Senkbearbeitung in Kontakt. Dadurch kann eine Zentrierung des Senkwerkzeugs in der Bohrung sichergestellt werden. Weiter bevorzugt steht der Einführzapfen zumindest mit dem Bereich mit der Innenoberfläche der Bohrung in Kontakt, die direkt an die Senkschneide angrenzt. So kann die Senkschneide bzw. können die Senkschneiden direkt zentriert werden.

Die bezüglich des Senkwerkzeugs bzw. der Werkzeuganordnung erwähnten Ausführungen sowie Vorteile gelten ebenso für das Verfahren und können auf dieses übertragen werden.

### ZEICHNUNGEN

Weitere Vorteile ergeben sich aus den vorliegenden Zeichnungsbeschreibungen. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: eine Ausführungsform einer Werkzeug-Ausrichtungsvorrichtung einer erfindungsgemäßen Werkzeuganordnung;
- **Fig. 2**: eine Werkzeuganordnung mit einer Werkzeug-Ausrichtungsvorrichtung und einem Werkzeug;
- **Fig. 3**: eine Außenansicht einer Werkzeug-Ausrichtungsvorrichtung einer erfindungsgemäßen Werkzeuganordnung;
- **Fig. 4**: eine Draufsicht einer Werkzeug-Ausrichtungsvorrichtung einer erfindungsgemäßen Werkzeuganordnung nach Fig. 3 ohne Abdeckung des Grundkörpers;
- **Fig. 5**: eine Drahtgitterdarstellung einer Seitenansicht einer Ausführungsform nach Fig. 3;
- **Fig. 6**: eine Drahtgitterdarstellung eines Längsschnittes einer Ausführungsform sowie Querschnittes durch den Grundkörper nach Fig. 3;
- **Fig. 7**: eine Außenansicht einer weiteren Ausführungsform einer Werkzeug-Ausrichtungsvorrichtung einer erfindungsgemäßen Werkzeuganordnung;
- **Fig. 8**: eine Draufsicht einer Ausführungsform einer Werkzeug-Ausrichtungsvorrichtung einer erfindungsgemäßen Werkzeuganordnung nach Fig. 7 ohne Abdeckung des Grundkörpers;
- **Fig. 9**: eine Schnittdarstellung durch eine Ausführungsform eines erfindungsgemäßen Werkzeugs und einer Ausführungsform einer erfindungsgemäßen Werkzeuganordnung eine Ausführungsform;
- **Fig. 10**: eine Schnittdarstellung durch ein Senkwerkzeug gemäß dem Stand der Technik und gemäß einer erfindungsgemäßen Ausführungsform.

In den Figuren sind gleiche oder gleichartige Komponenten mit gleichen Bezugszeichen beziffert.

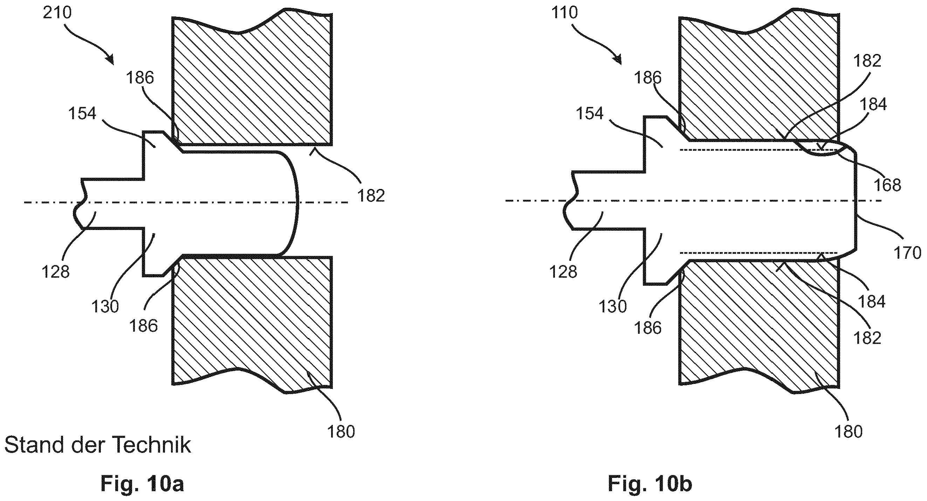

Zunächst wird mit Bezug auf die Fig. 10a ein Senkwerkzug 210 gemäß dem Stand der Technik beschrieben.

Das in Fig. 10a dargestellte Senkwerkzeug 210 ist ein Kegelsenkwerkzeug und umfasst einen nur teilweise dargestellten Werkzeugschaft 128 und einen Werkzeugkopf 130, der einen abgerundeten Einführzapfen 266 und eine Mehrzahl von Entgratungs- bzw. Senkschneiden 154 aufweist. Das Senkwerkzeug 210 ist mit dem Einführzapfen 266 spielbehaftet in einer Bohrung 182 eines Werkstücks aufgenommen. Mittels des Werkzeugkopfs 130 bzw. der Entgratungs- bzw. Senkschneiden 154 wurde die Bohrung 182 an einer Werkstückoberseite mit einer Fase 186 versehen. Durch den Zwischenraum bzw. das Spiel zwischen der Innenoberfläche der Bohrung 182 sowie der Außenoberfläche des Werkzeugkopfs 130 kann das Senkwerkzeug nicht zentriert auf der Längsachse der Bohrung 182 gehalten werden. Die zu erstellende Fase 186 wird folglich außermittig bezüglich der Rotationsachse der Bohrung 182 ausgebildet. Bei denen aus dem Stand der Technik bekannten Senkwerkzeugen 210 bzw. derartigen Verfahren liegt die Bohrung 182 bereits mit einem Soll-Durchmesser, d. h. mit den Endmaßen, vor. In einem Nachbearbeitungsschritt erfolgt lediglich das Einbringen der Fase 186 bzw. Senke.

Fig. 10b zeigt eine Ausführungsform eines erfindungsgemäßen Senkwerkzeugs 110, welches analog zu dem Senkwerkzeug 210 von Fig. 10a einen Werkzeugschaft 128, einen Werkzeugkopf 130 mit mehreren Entgratungs- oder Senkschneiden 154 und einen Einführzapfen 166 umfasst. Der Einführzapfen 166 weist eine an einer radialen Außenseite angeordnete Reibschneide 168 auf, wobei auch zwei oder mehr entlang des Umfangs verteilte Reibschneiden 168 vorgesehen sein können.

Der Einführzapfen 166 verjüngt sich in einem ersten Teilbereich, über den sich die Reibschneide 168 erstreckt, in Richtung seiner Stirnseite 170 hin und ist in einem zweiten, zwischen dem ersten Teilbereich und dem Werkzeugkopf 130 vorgesehenen Teilbereich zylindrisch. Der zylindrische Teilbereich schließt sich unmittelbar an die Reibschneide 168 an.

Zum Herstellen einer eingesenkten Bohrung wird zunächst eine durch gestrichelte Linien dargestellte Rohbohrung 184 in dem Werkstück hergestellt, deren Durchmesser kleiner ist als der Soll-Durchmesser der endgültigen Bohrung 182. Beim Einführen des Senkwerkzeugs 110 in die zu bearbeitende Rohbohrung 184 gelangt zunächst der erste Teilbereich mit der Reibschneide 168 in die Rohbohrung 184. Mit zunehmender Einführtiefe gelangt die Reibschneide 168 mit der Wandung der Rohbohrung 184 in Kontakt und trägt dort Material ab, bis die Bohrung 182 ihren Soll-Durchmesser erreicht hat, der durch den radial äußersten Teilabschnitt der Reibschneide 168 bestimmt ist. Mit weiter zunehmender Einführtiefe gelangt dann zunächst der zylindrische Teilbereich des Einführzapfens 166 in die nun aufgeweitete Bohrung 182 hinein und übernimmt dort die Führung des Senkwerkzeugs 110, bis schließlich der Werkzeugkopf 130 mit seinen Entgratungs- oder Senkschneiden 154 in Kontakt mit dem Werkstück 180 gelangt und eine Fase 186 in das Werkstück 180 schneidet. Dabei entspricht der Soll-Durchmesser der Bohrung 182 bevorzugt dem Durchmesser des Einführzapfens 166. Die Reibschneide 168 steht folglich bevorzugt nicht über den Durchmesser des Einführzapfens 166 über.

Gemäß einer Abwandlung kann ein erfindungsgemäßes Senkwerkzeug auch als Plansenkwerkzeug zum Herstellen von zylindrischen Einsenkungen ausgestaltet sein.

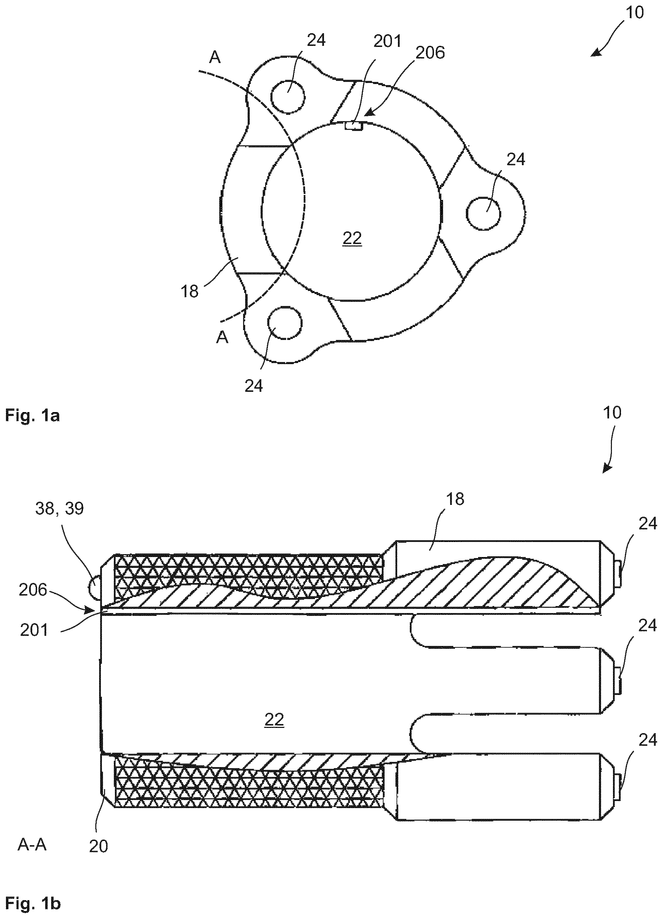

Fig. 1 zeigt eine Ausführungsform einer Werkzeug-Ausrichtungsvorrichtung 10 für eine erfindungsgemäße Werkzeuganordnung. Die Unteransicht in Fig. 1a zeigt die einer Werkstückoberfläche zugewendete Unterseite der Werkzeug-Ausrichtungsvorrichtung 10. Dabei sind drei Tastelemente 24 und ein Durchgangsloch 22 sichtbar. Die drei Tastelemente 24 sind in Umfangsrichtung des Grundkörpers 18 gleichverteilt angeordnet um einen stabilen Stand und eine exakte Ausrichtung auf einer Ebene zu erreichen. An der Innenseite des Grundkörpers 18 ist eine Führungseinrichtung 206 in Form eines längsaxial ausgerichteten Stegs 201 angebracht. Das Durchgangsloch 22 dient zur Aufnahme eines Spanwerkzeugs mit einem Anschlag und hat einen Innendurchmesser, der einem Außendurchmesser eines Anschlags entspricht.

Fig. 1b zeigt einen Längsschnitt der Ausführungsform entlang der Schnittlinie A-A der Fig. 1a. Die drei Tastelemente 24 stehen an der Unterseite über den Grundkörper 18 über. Die Tastelemente 24 verlaufen jeweils in einem separaten länglichen Abschnitt des Grundkörpers, wobei der Grundkörper in diesem Bereich keinen zusammenhängenden Querschnitt aufweist, sondern eine Art Dreibein ausbildet. Entlang der Innenoberfläche des Grundkörpers 18 ist ein Steg 201 angebracht. Dieser ist über die komplette Länge des Grundkörpers 18 ausgebildet. Bei einer Ausführung mit einem Pin wäre dieser nur über einen kürzen Abschnitt bezüglich der Länge des Grundkörpers 18 an der Innenseite des Grundkörpers 18 ausgebildet. An der Oberseite des Grundkörpers 18 ist eine Abdeckung 20 sowie eine Signaleinrichtung 38 in Form eines LED-Signalgebers 39 angebracht. Es ist ebenso eine Ausführung mit mehr als einem Signalgeber denkbar. Der LED-Signalgeber 39 wird aktiviert, sobald alle drei Tastelemente 24 in Kontakt mit der Werkstückoberfläche stehen und zeigt somit eine Ausrichtung an. Die axiale Position bzw. ein Überstand der Tastelemente 24 über die Unterseite des Grundkörpers 18 kann eingestellt werden, um eine abgewinkelte Ausrichtung von der Normalen der Werkstückoberfläche zu ermöglichen.

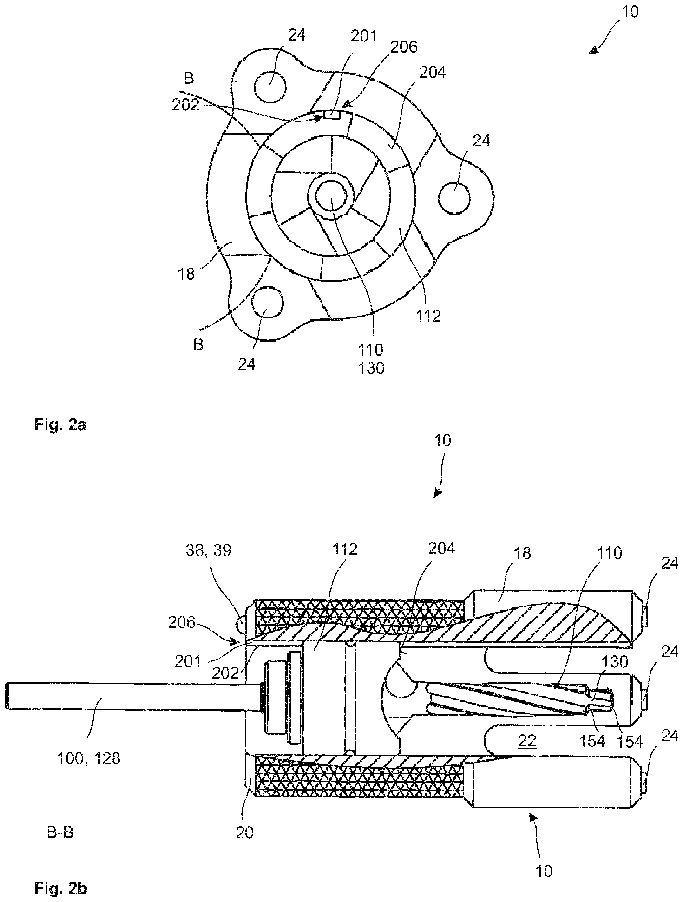

Die Darstellung in Fig. 2a und Fig. 2b zeigt die Werkzeug-Ausrichtungsvorrichtung 10 mit eingebautem Anschlag 112 und einem nicht erfindungsgemäßen Werkzeug 310, welches ohne Weiteres durch ein erfindungsgemäßes Senkwerkzeug 110 ersetzt werden kann. Der Anschlag 112 ist im Innern des Grundkörpers 18 eingebracht und über eine Führungseinrichtung 206 drehfest und axial verschieblich gelagert. Der Anschlag 112 weist dafür eine Nut 202 auf, in die der Steg 201 eingreift. Die Ansicht in Fig. 2a zeigt die Unterseite der Werkzeug-Ausrichtungsvorrichtung 10, wobei in dieser Ansicht der Werkzeugkopf 130 sichtbar ist.

Der Längsschnitt in Fig. 2b entlang der Teilschnittlinien B-B zeigt, dass der Anschlag 112 nicht über die komplette Länge der Grundkörpers 18 ausgebildet ist. Der Anschlag 112 kann in axialer Längsrichtung innerhalb des Grundkörpers 18 verschoben werden, bis die Unterseite 204 des Anschlags 112 in einer Ebene mit der Unterseite des Grundkörpers 18 bzw. der Tastelemente 24 liegt. An der gegenüberliegenden Seite des Grundkörpers 18 überragt der Werkzeugschaft 128 die Werkzeug-Ausrichtungsvorrichtung 10. In den weiteren Ausführungen entspricht die Werkzeug-Ausrichtungsvorrichtung 10 der aus Fig. 1.

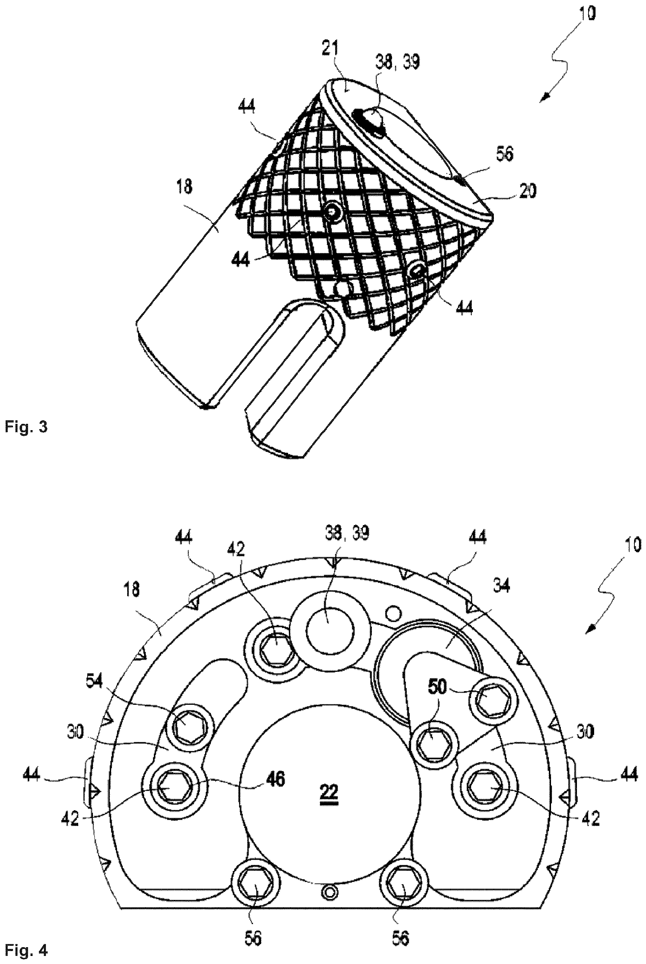

Fig. 3 zeigt eine dreidimensionale Darstellung einer weiteren Ausführungsform einer Werkzeug-Ausrichtungsvorrichtung 10. In der Außenansicht sind der Grundkörper 18, die Abdeckung 20 des Grundkörpers 18, die Signaleinrichtung 38, die Arretierschrauben 44 sowie eine Führungshülse 48 zum Einsatz eines Werkzeugschaftes (nicht dargestellt) sichtbar. Der Grundkörper 18 hat einen teilkreisförmigen Querschnitt, wobei an einer Seite eine Abflachung ausgebildet ist. Dadurch kann die Werkzeug-Ausrichtungsvorrichtung 10 auch in Eckbereichen bzw. Randbereichen eines Werkstücks mit einer angrenzenden Wand oder Stufe eingesetzt werden, wobei auch Bereich nahe der angrenzenden Wand bearbeitet werde können. Der Grundkörper 18 weist Aussparungen auf der dem Werkstück zugewandten Seite auf. Dadurch kann eine Abfuhr von Spänen oder Schmiermittel während des Rotierens eines eingesetzten Werkzeugs gewährleistet werden. Die Oberfläche des Grundkörpers 18 ist strukturiert ausgebildet, um die Montage an einem Werkzeugschaft 14 zu erleichtern. Auf der Abdeckung 20 ist die Signaleinrichtung 38 in Form eines LED-Signalgebers 39 angebracht, die ein Ausrichtsignal abgeben kann. Die Arretierschrauben 44 dienen der Fixierung der Kontaktjustierschrauben (nicht sichtbar) zur Einstellung der Sensibilität des Schaltpunktes.

Eine Draufsicht ohne Abdeckung 20 des Grundkörpers 18 der Werkzeug-Ausführungsform aus Fig. 3 zeigt Fig. 4. Ergänzend sind in dieser Draufsicht die Fixierschrauben 56 für die Abdeckung 20 sowie die Signaleinrichtung 38 dargestellt. Im Innern des Grundkörpers 18 sind die Schraubenkontaktbleche 30 in einer Draufsicht, die Schraubenköpfe der Kontaktjustierschrauben 42 sowie die Schraubenköpfe der Fixierschrauben 54 der Schraubenkontaktbleche 30 sichtbar. Die Werkzeug-Ausrichtungsvorrichtung 10 besitzt zwei getrennte Schraubenkontaktbleche 30, wobei in einem Schraubenkontaktblech 30 zwei Kontaktjustierschrauben 42 angebracht sind. Mit diesem Schraubenkontaktblech 30 steht ebenso die elektrische Stromquelle 34 in Kontakt, die mit den Fixierschrauben 50 montiert ist. Weiterhin ist mit diesem Schraubenkontaktbleche 30 die Signaleinrichtung 38 kontaktiert. Außerhalb des Grundkörpers 18 sind die Arretierschrauben 44 in einer Seitenansicht sichtbar, welche die Kontaktjustierschrauben 42 in einer gewissen Lage arretieren. Im Innern des Grundkörpers 18 ist ein Durchgangsloch 22 zur Durchführung einer Führungshülse oder zum direkten Einsatz eines Werkzeugs vorgesehen.

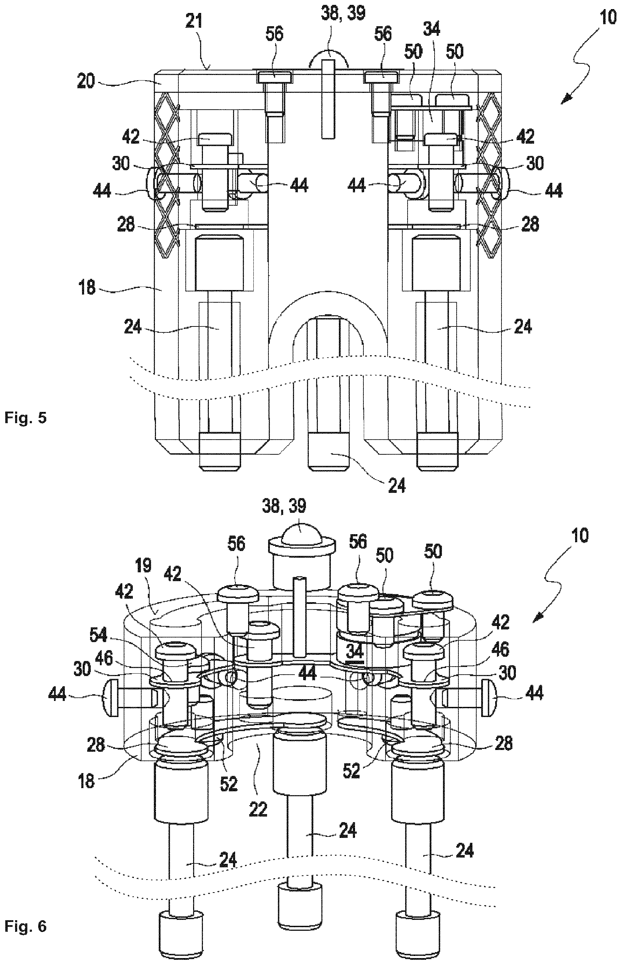

Fig. 5 zeigt eine Drahtgitterdarstellung einer Ausführungsform nach Fig. 3. Dargestellt ist eine Seitenansicht der Werkzeug-Ausrichtungsvorrichtung 10 von der Seite des abgeflachten Grundkörpers 18, der den Teilkreis ausbildet. Die Tastelemente 24 überragen an der Unterseite den Grundkörper 18, wobei die Tastelemente 24 in vertikaler Richtung hin zu einer Werkstückoberfläche verschieblich gelagert sind, sodass ein Kontakt zwischen Tastelemente 24, Federkontaktblech 28 und Kontaktjustierschraube 42 möglich ist. Die Federkontaktbleche 28 sind parallel versetzt zu den Schraubenkontaktblechen 30 angeordnet, wobei die Kontaktjustierschrauben 42 durch die Schraubenkontaktbleche 30 hindurchgesteckt oder eingeschraubt werden. Der Kontakt der Kontaktjustierschrauben 42 zu den Federkontaktblechen 28 erfolgt durch ein vertikales Verschieben der Tastelemente 24, wobei die Federkontaktbleche 28 an die Kontaktjustierschrauben 42 gerückt werden. Über den Kontakt zwischen Werkstück (nicht dargestellt), Tastelemente 24, Federkontaktblech 28, Kontaktjustierschraube 42 und Schraubenkontaktblech 30 wird der Stromkreis geschlossen. Aufgrund dessen sind die Federkontaktbleche 28 und Schraubenkontaktbleche 30 mehrteilig ausgebildet, um eine schaltbare Verbindung zwischen den einzelnen Segmentabschnitten auszubilden.

Eine detaillierte Darstellung des inneren Aufbaus der Werkzeug-Ausrichtungsvorrichtung 10 zeigt Fig. 6. Die Kontaktjustierschrauben 42 sind über Aussparungen im Innern des Grundkörpers 18 von der Oberseite zugänglich, und können von dort in die Schraubenkontaktbleche 30 eingesetzt werden. Von der Außenseite des Grundkörpers 18 können die Kontaktjustierschrauben 42 mit jeweils einer zugehörigen Arretierschraube 44 in einer gewünschten vertikalen Lage fixiert werden, um eine Ausrichtungsrichtung gegenüber der Normalen einer Werkstückoberfläche festzulegen. Sind alle Schaltpunkte identisch, wird die Spanbearbeitung exakt in den Normalen durchgeführt. Über diese vertikale Lage wird die Sensibilität der Werkzeug-Ausrichtungsvorrichtung 10, d.h. der Schaltpunkt, ab wann der Stromkreis 38 geschlossen wird, bestimmt. Somit kann die Werkzeug-Ausrichtungsvorrichtung 10 für einen bestimmten Anpressdruck einer Bedienperson angepasst werden. Das mittlere Tastelement 24 ist nicht in einer Wirkungslinie mit der zugehörigen Kontaktjustierschraube 42 angeordnet, die beiden anderen Tastelemente 24 liegen in einer Ebene mit der zugehörigen Kontaktjustierschraube 42. Die Signaleinrichtung 38 ist mit einem Schraubenkontaktblech 30 leitend verbunden. In dieser Ansicht sind ebenso die Fixierschrauben 50 der elektrische Stromquelle 34 sowie die Fixierschrauben 56 der Abdeckung (nicht dargestellt) abgebildet.

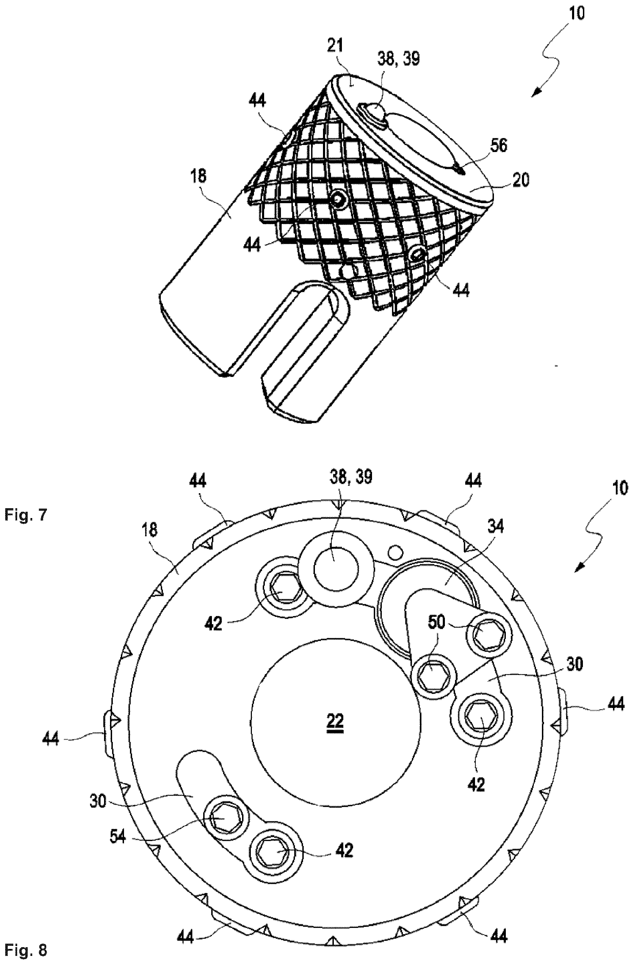

Fig. 7 zeigt eine weitere Ausführungsform einer Werkzeug-Ausrichtungsvorrichtung 10. Der Grundkörper 18 hat einen kreisförmigen Querschnitt und eignet sich somit für eine Bearbeitung von baulich nicht beschränkten Werkstückoberflächen. In den übrigen Ausführungen entspricht diese Darstellung der aus Fig. 3.

In Fig. 8 ist eine Draufsicht auf eine Ausführungsform aus Fig. 7 ohne Abdeckung 20 des Grundkörpers 18 dargestellt. Der Grundkörper 18 weist einen kreisförmigen Querschnitt auf, wobei die Kontaktjustierschrauben 42 auf jeweils ein Drittel des Kreisumfangs angeordnet sind. In der Darstellung sind die Schraubenkontaktbleche 30 sichtbar, die Federkontaktbleche 28 sind in einer parallel versetzten Ebene unterhalb der Schraubenkontaktbleche 30 angeordnet und in dieser Ansicht nicht dargestellt. Ein Schraubenkontaktblech 30 stellt eine leitende Verbindung zwischen zwei Kontaktjustierschrauben 42, der elektrischen Stromquelle 34 und der Signaleinrichtung 38 her. Die elektrische Stromquelle 34 ist über die Fixierschrauben 50 an dem Grundkörper 18 angebracht. Das weitere Schraubenkontaktblech 30 ist über eine Fixierschraube 54 an dem Grundkörper 18 angebracht. Die Arretierschrauben 44 dienen dazu, die Kontaktjustierschrauben 42 in einer gewünschten Lage zu fixieren.

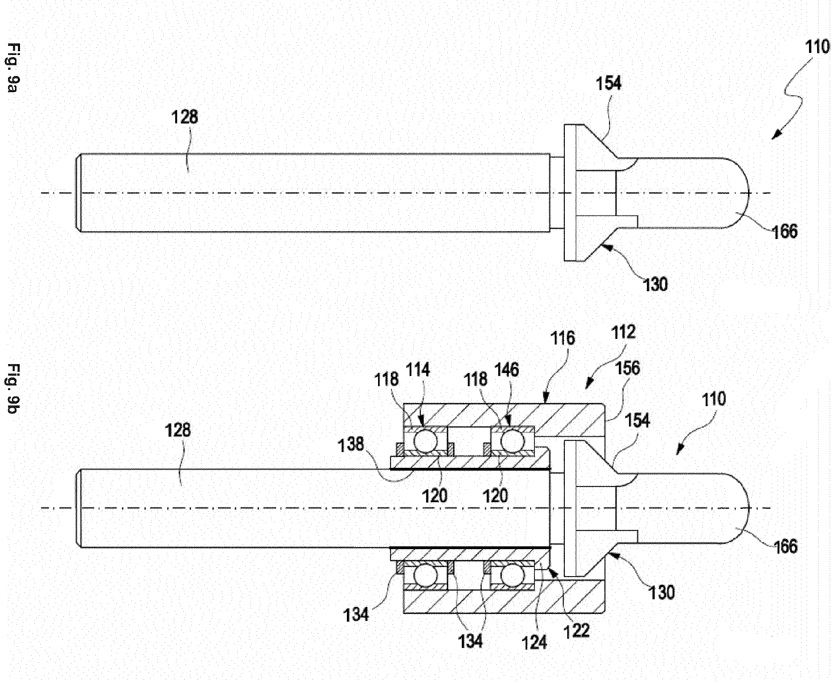

Die Fig. 9 zeigt eine Werkzeuganordnung mit einem Senkwerkzeug 110 und mit einem an dem Senkwerkzeug 110 befestigten Anschlag 112. Werkzeug-Ausrichtungsvorrichtung ist nicht vorgesehen bzw. nicht dargestellt. Das in Fig. 9a dargestellte Senkwerkzeug 110 entspricht dem Senkwerkzeug 110 von Fig. 10b und umfasst einen Werkzeugschaft 128 und einen Werkzeugkopf 130, der einen sich zur Stirnseite 170 hin verjüngenden, mit einer Reibschneide 168 versehenen Einführzapfen 166 und eine Mehrzahl von Entgratungs- bzw. Senkschneiden 154 aufweist.

Der Anschlag 112 umfasst, wie in Fig. 9b dargestellt, eine Anschlaghülse 116, die mittels zweier Kugellager 114, 146 frei drehbar um eine Schafthülse 122 gelagert ist. Die Schafthülse 122 kann axial auf den Werkzeugschaft 128 bis zum Werkzeugkopf 130 aufgeschoben und an einer axialen Stelle des Schafts 128, die die Anschlagtiefe definiert, mittels einer Klebeverbindung 138 am Schaft 128 drehfest kraftschlüssig verbunden werden. Die erste Lagerbuchse 118 des ersten und zweiten Kugellagers 114, 146 ist in der Innenwandung der Anschlaghülse 116 eingeklebt. Die zweite Lagerbuchse 120 des ersten Kugellagers ist auf der Schafthülse 122 mittels zweier Lagerringe 134 fixiert und kann gleichwohl auf der Schafthülse 122 aufgeklebt sein. Die zweite Lagerbuchse 120 des zweiten Kugellagers 146 ist durch einen Gegenlagerring 124 der Schafthülse 122 und einem Lagerring 134 arretiert. Die Anschlaghülse 116 kann sich über die beiden Lager 114, 146 gegenüber der Schafthülse 122 verdrehen. Die Schafthülse 122 ist kraftschlüssig auf dem Schaft 128 des Senkwerkzeugs 110 verklebt, wobei die axiale Klebeposition die Anschlagtiefe des Senkwerkzeugs 110 definiert. Das in der Fig. 9a, Fig. 9b dargestellte Senkwerkzeug 110 eignet sich zum Einsatz mit einer Werkzeug-Ausrichtungsvorrichtung nach einem der zuvor dargestellten Ausführungsformen.

In der in Fig. 9 dargestellten Werkzeuganordnung sind im Außenumfang der Anschläge keine Pins, Nuten oder Stege dargestellt, die selbstverständlich dazu gedacht werden können, um ein funktionelles Zusammenwirken mit einer Führungseinrichtung einer Ausrichtvorrichtung bereitstellen zu können.

### Bezugszeichenliste

- 10: Werkzeug-Ausrichtungsvorrichtung
- 18: Grundkörper
- 19: Oberseite des Grundkörpers
- 20: Abdeckung des Grundkörpers
- 21: Oberseite der Abdeckung
- 22: Durchgangsloch
- 24: Tastelemente
- 28: Federkontaktblech
- 30: Schraubenkontaktblech
- 34: elektrische Stromquelle
- 38: Signaleinrichtung
- 39: LED-Signalgeber
- 42: Kontaktjustierschraube
- 44: Arretierschraube
- 46: Bohrung des Schraubenkontaktblechs
- 50: Fixierschraube für Batterie
- 52: Fixierschraube für erstes Kontaktblech
- 54: Fixierschraube für zweites Kontaktblech
- 56: Fixierschraube für Abdeckung des Grundkörpers

- 110, 210: Senkwerkzeug
- 112: Anschlag
- 114: Lager
- 116: Anschlaghülse
- 118: erste Lagerbuchse
- 120: zweite Lagerbuchse
- 122: Schafthülse
- 124: Gegenlagerring
- 128: Werkzeugschaft
- 130: Werkzeug kopf
- 134: Lagerring
- 138: Klebeverbindung
- 142: Verspannmittel
- 144: Verspannschrauben
- 146: Zweites Lager
- 152: Eingriffsvertiefung
- 154: Schneide
- 156: Anschlagring
- 166, 266: Einführzapfen
- 168: Reibschneide
- 170: Stirnseite

- 180: Werkstück
- 182: Bohrung
- 184: Rohbohrung
- 186: Fase

- 200: Pin
- 201: Steg
- 202: Nut
- 204: Unterseite des Anschlags
- 206: Führungseinrichtung

- 310: Werkzeug

## Patentansprüche

1. Senkwerkzeug (110), insbesondere Kegelsenkwerkzeug oder Plansenkwerkzeug, umfasst einen Werkzeugschaft (128) und einen Werkzeugkopf (130), welcher mehrere Entgratungs- oder Senkschneiden (154) und einen Einführzapfen (166) aufweist, **dadurch gekennzeichnet, dass** der Einführzapfen (166) zumindest eine an einer radialen Außenseite angeordnete Reibschneide (168) aufweist, die sich über weniger als 33% der Gesamtlänge des Einführzapfens (166) erstreckt, wobei die Reibschneide (168) in eine Rohbohrung (184) mit einem Durchmesser geringer als ein Soll-Durchmesser einer Bohrung (182) schneidend einführbar ist, wobei die Reibschneide (168) ebenso als Bohrschneide wirkt und am Einführzapfen (166) in einem Radius, der im wesentlichen dem Radius eines Soll-Durchmessers der Bohrung (182) entspricht, angeordnet ist, und der Einführzapfen (166) den Soll-Durchmesser der Bohrung (182) aufweist und in der Bohrung (182) spielfrei führbar ist.

2. Senkwerkzeug (110) nach Anspruch 1, **dadurch gekennzeichnet, dass** die Reibschneide (168) in einem Frontbereich des Einführzapfens (166) angeordnet ist und / oder am Einführzapfen (168) weitere Entgratungsschneiden (154) in einer versetzten Position in Richtung Werkzeugschaft (128) angeordnet sind, die eine Feinbearbeitung einer zu bearbeitenden Bohrung bewirken..

3. Senkwerkzeug (110) nach Anspruch 1 oder 2, **dadurch gekennzeichnet, dass** der Einführzapfen (166) sich in einem ersten Teilbereich, insbesondere in dem Teilbereich, über den sich die Reibschneide (168) erstreckt, in Richtung seiner Stirnseite (170) hin verjüngt und in einem zweiten, zwischen dem ersten Teilbereich und dem Werkzeugkopf (130) vorgesehenen Teilbereich zylindrisch ist.

4. Senkwerkzeug (110) nach Anspruch 3, **dadurch gekennzeichnet, dass** der Halbmesser des Einführzapfens (166) im zweiten, zylindrischen Teilbereich gleich dem Halbmesser des Einführzapfens (166) in einem durch einen radial äußersten Teilabschnitt der Reibschneide (168) bestimmten Punkt ist.

5. Senkwerkzeug (110) nach Anspruch 3 oder 4, **dadurch gekennzeichnet, dass** sich der Einführzapfen (166) in einem Längsschnitt durch das Senkwerkzeug betrachtet entlang einer Krümmungslinie verjüngt, deren Krümmung mit abnehmender Distanz zu der Stirnseite (170) des Einführzapfens (166) zunimmt.

6. Senkwerkzeug (110) nach einem der vorgenannten Ansprüche, **dadurch gekennzeichnet, dass** die Reibschneide (168) von der Stirnseite (170) des Einführzapfens (166) in axialer Richtung beabstandet ist, wobei insbesondere die Stirnseite (170) des Einführzapfens (166) flach ist.

7. Werkzeuganordnung mit einem Senkwerkzeug (110) nach einem der vorgenannten Ansprüche und einem an dem Werkzeugschaft (128) des Senkwerkzeugs (110) befestigtem Anschlag (112), wobei der Anschlag eine mit einem Gleit- oder Wälzlager (114) um das Senkwerkzeug (110) frei drehbar gekoppelte Anschlaghülse (116) aufweist.

8. Werkzeuganordnung nach Anspruch 7, **dadurch gekennzeichnet, dass** eine erste Lagerbuchse (118) des Lagers (114) die Anschlaghülse (116) trägt und eine zweite Lagerbuchse (120) des Lagers (114) drehfest auf einer Schafthülse (122) sitzt, wobei die Schafthülse (122) auf einem gewindefreien Abschnitt des Werkzeugschaft (128) des Senkwerkzeugs (110) befestigt ist.

9. Werkzeuganordnung nach Anspruch 7 oder 8, **dadurch gekennzeichnet, dass** an dem Anschlag (112) eine Werkzeug-Ausrichtungsvorrichtung (10) zum Ausrichten einer einzubringenden Senkung oder zum Ausrichten eines Nachbearbeitungsschrittes gegenüber einer Normalen der Oberfläche eines zu bearbeitenden Werkstücks angeordnet ist, wobei die Werkzeug-Ausrichtungsvorrichtung (10) einen Grundkörper (18), und ein Durchgangsloch (22) und mindestens eine Signaleinrichtung (38) umfasst, die bei mechanischem Kontakt der Werkzeug-Ausrichtungsvorrichtung (10) mit der Oberfläche des Werkstücks aktiviert wird und mindestens ein Ausrichtsignal beim Ausrichten in einer Ausrichtungsrichtung ausgibt, und wobei in dem Grundkörper (18) der Anschlag (112) aufgenommen ist.

10. Werkzeuganordnung nach Anspruch 9, **dadurch gekennzeichnet, dass** der Grundkörper (18) eine Führungseinrichtung (206) umfasst, die eine Verbindung zwischen einer Anschlaghülse (116) des Anschlags (112) und der Werkzeug-Ausrichtungsvorrichtung (110) herstellt, sodass der Anschlag (112) in die Ausrichtungsrichtung ausrichtbar ist.

11. Werkzeuganordnung nach Anspruch 9 oder 10, **dadurch gekennzeichnet, dass** der Anschlag (112) drehfest mit der Werkzeug-Ausrichtungsvorrichtung (10) verbunden ist.

12. Werkzeuganordnung nach einem der Ansprüche 9 bis 11, **dadurch gekennzeichnet, dass** der Anschlag (112) längsverschieblich in der Werkzeug-Ausrichtungsvorrichtung (10) geführt ist, insbesondere durch die Führungseinrichtung (206) geführt ist, wobei der Anschlag (112) in dem Grundkörper (18) längsaxial in Richtung Werkstück verschoben werden kann.

13. Werkzeuganordnung nach Anspruch 12, **dadurch gekennzeichnet, dass** die Führungseinrichtung (206) zumindest einen Pin (200), einen Steg (201) und / oder eine Nut (202) umfasst, wobei bevorzugt der Steg (201) und/ oder die Nut (202) in Längsrichtung, bevorzugt parallel zur Längsachse, der Werkzeug-Ausrichtungsvorrichtung (10) verläuft und entsprechend in einer Nut, oder einem Pin oder Steg der Anschlaghülse (116) längsaxial führbar ist, sodass eine drehfeste Verbindung zwischen der Werkzeug-Ausrichtungsvorrichtung (10) und dem Anschlag (112) und eine axiale Verschieblichkeit des Anschlags (112) in der Werkzeug-Ausrichtungsvorrichtung (10) bereitgestellt ist.

14. Werkzeuganordnung nach Anspruch 13, **dadurch gekennzeichnet, dass** der Steg (201) oder die Nut (202) über die komplette Länge der Werkzeug-Ausrichtungsvorrichtung (10) oder des Anschlags (112) verläuft, sodass der Anschlag (12) derart verschoben werden kann, dass eine Unterseite (204) des Anschlags (112) in mechanischen Kontakt mit der Oberfläche des Werkstücks treten kann.

15. Werkzeuganordnung nach einem der Ansprüche 9 bis 14, **dadurch gekennzeichnet, dass** die Werkzeug-Ausrichtungsvorrichtung (10) mindestens zwei, bevorzugt mindestens drei mechanische oder elektrische Tastelemente (24) zur Auflage auf der Oberfläche des Werkstücks umfasst, wobei bevorzugt die Tastelemente (24) umfangsmäßig gleichverteilt an der werkstückseitigen Stirnfläche des Grundkörpers (18) angeordnet sind.

16. Werkzeuganordnung nach Anspruch 15, **dadurch gekennzeichnet, dass** die axiale Tastposition der Tastelemente (24) zur Einstellung der Ausrichtungsrichtung verstellbar ist.

17. Werkzeuganordnung nach Anspruch 15 oder 16, **dadurch gekennzeichnet, dass** durch eine Ausrichtbewegung der Werkzeug-Ausrichtungsvorrichtung (10) bezüglich der Normalen der Oberfläche des Werkstücks alle Tastelemente (24) einen Stromkreis zwischen einer im Grundkörper (18) umfassten elektrischen Stromquelle (34) und der Signaleinrichtung (38) durch eine von den Tastelementen (24) aktivierten Reihenschaltung geschlossen wird, um durch den geschlossenen Stromkreis die einzelne Signaleinrichtung (38) zu aktivieren.

18. Werkzeuganordnung nach Anspruch 16 oder 17, **dadurch gekennzeichnet, dass** ein elektrischer Schaltpunkt zumindest eines elektrischen Tastelements (24) in Auflagerichtung hin zur Oberfläche des Werkstücks lageverstellbar, insbesondere relativ zur Oberfläche des Werkstücks mittels einer Kontaktjustierschraube (42) verschraubbar oder verschiebbar ist, so dass die Ausrichtungsrichtung bezüglich der Normalen einer Oberfläche eines Werkstücks einstellbar ist.

19. Werkzeuganordnung nach einem der Ansprüche 15 bis 18, **dadurch gekennzeichnet, dass** zumindest ein mit zumindest einem elektrischen Tastelement (24) mechanisch kontaktierbares Federkontaktblech (28) über die Kontaktjustierschraube (42) mit einem Schraubenkontaktblech (30) elektrisch kontaktierbar ist, wobei die Kontaktjustierschraube (42) bevorzugt von der Oberseite (19) des Grundkörpers (18) zugänglich und einstellbar und in Ausrichtungsrichtung im Grundkörper (18) angeordnet ist, oder dass zumindest zwei Kontaktjustierschrauben (42) über ein gemeinsames Federkontaktblech (28) elektrisch verbindbar sind und zumindest zwei Kontaktjustierschrauben (42) über ein Schraubenkontaktblech (30) elektrisch miteinander verbunden sind.

20. Werkzeuganordnung nach Anspruch 19, **dadurch gekennzeichnet, dass** das mindestens eine Federkontaktblech (28) parallel zu dem mindestens einen Schraubenkontaktblech (30) im Grundkörper (18) angeordnet ist, wobei das Schraubenkontaktblech (30) mit dem Federkontaktblech (28) über mindestens ein Kontaktjustierschraube (42) durch eine, durch das Tastelement (24) ausgelöste, Federbewegung elektrisch kontaktierbar ist.

21. Werkzeuganordnung nach Anspruch 19 oder 20, **dadurch gekennzeichnet, dass** eine elektrische Stromquelle (34) und / oder die Signaleinrichtung (38) in elektrischem Kontakt mit mindestens einem Federkontaktblech (28) und / oder mindestens einem Schraubenkontaktblech (30) steht.

22. Werkzeuganordnung nach einem der Ansprüche 19 bis 21, **dadurch gekennzeichnet, dass** das mindestens eine Schraubenkontaktblech (30) Bohrungen (46) aufweist, in welche die Kontaktjustierschraube (42) einsteckbar, einlötbar oder einschraubbar ist, wodurch eine permanentleitende Verbindung zwischen dem Schraubenkontaktblech (30) und der Kontaktjustierschraube (42) hergestellt ist.

23. Werkzeuganordnung nach einem der Ansprüche 19 bis 22, **dadurch gekennzeichnet, dass** zumindest eine Kontaktjustierschraube (42) über eine Arretierschraube (44) lagegesichert werden kann.

24. Werkzeuganordnung nach einem der Ansprüche 17 bis 23, **dadurch gekennzeichnet, dass** die mindestens zwei Tastelemente (24), bevorzugt mindestens drei Tastelemente (24) die gleiche Länge L aufweisen und / oder dass der Grundkörper (18) kreiszylinderförmig oder teilkreiszylinderförmig ausgebildet ist, und / oder dass die Signaleinrichtung (38) auf der Oberseite (19) des Grundkörpers (18) angeordnet und als optischer, haptischer und / oder als akustischer Signalgeber, bevorzugt als LED-Signalgeber (39) ausgebildet ist.

25. Verfahren zum Herstellen einer oberflächenseitig eingesenkten und/oder entgrateten, einen Solldurchmesser und eine Innenoberfläche aufweisenden Bohrung (182) in einem Werkstück (180) unter Verwendung eines rotierenden Senkwerkzeugs (110) nach einem der Ansprüche 1 bis 7 oder einer Werkzeuganordnung nach einem der Ansprüche 8 bis 24, mit den Schritten: Einbringen einer Rohbohrung (184) in das Werkstück und Einsenken und/oder Entgraten der Rohbohrung (184) mittels des Senkwerkzeugs (110), wobei der Durchmesser der Rohbohrung (184) kleiner gewählt ist als ein maximaler, durch einen radial äußersten Teilabschnitt der Reibschneide (168) bestimmter Durchmesser des Einführzapfens (166) des Senkwerkzeugs, so dass die Rohbohrung (184) mittels der an dem Einführzapfen (166) angeordneten Reibschneide (168) auf den Solldurchmesser aufgeweitet wird.

26. Verfahren nach Anspruch 25, **dadurch gekennzeichnet, dass** der Durchmesser der Rohbohrung (184) mindestens 80%, bevorzugt mindestens 90%, des maximalen Durchmessers des Einführzapfens (166) beträgt, und/oder dass der Durchmesser der Rohbohrung (184) höchstens 99%, bevorzugt höchstens 97,5%, besonders bevorzugt höchstens 95% des maximalen Durchmessers des Einführzapfens (166) beträgt.

27. Verfahren nach Anspruch 25 oder 26, **dadurch gekennzeichnet, dass** der Einführzapfen (166) länger als eine maximale Tiefe der Rohbohrung (184) ausgebildet ist, wobei bei Ausbildung einer Senkbearbeitung die Reibschneide (168) über die Bohrung (184) an einer gegenüberliegenden Seite bezüglich der Senkbearbeitung übersteht, bevorzugt die komplette Erstreckung der Reibschneide (168) aus der Bohrung (184) heraussteht.

28. Verfahren nach einem der Ansprüche 25 bis 27, **dadurch gekennzeichnet, dass** der Einführzapfen (166) eine Länge aufweist, mit welcher dieser mit der Innenoberfläche der Bohrung (182) vollflächig in Kontakt steht.
